(19) Europäisches Patentamt
European Patent Office
Office européen des brevets

(11) **EP 4 304 041 B1**

(12) **EUROPÄISCHE PATENTSCHRIFT**

(45) Veröffentlichungstag und Bekanntmachung des Hinweises auf die Patenterteilung:
**05.03.2025 Patentblatt 2025/10**

(21) Anmeldenummer: **22207533.5**

(22) Anmeldetag: **15.11.2022**

(51) Internationale Patentklassifikation (IPC):
**H02J 3/50** (2006.01)   **H02J 3/32** (2006.01)

(52) Gemeinsame Patentklassifikation (CPC):
**H02J 3/50; H02J 3/32; Y02E 70/30**

(54) **VERFAHREN, VORRICHTUNG UND ELEKTRONISCHE AUSRÜSTUNG ZUR BLINDLEISTUNGSEINSTELLUNG EINER INTEGRIERTEN FELDSTATION FÜR EINE WINDKRAFTANLAGE, EINE PHOTOVOLTAIK UND EINE ENERGIESPEICHEREINHEIT**

METHOD, APPARATUS AND ELECTRONIC EQUIPMENT FOR REACTIVE POWER ADJUSTMENT OF AN INTEGRATED FIELD STATION FOR A WIND TURBINE, A PHOTOVOLTAIC AND AN ENERGY STORAGE UNIT

PROCÉDÉ, DISPOSITIF ET ÉQUIPEMENT ÉLECTRONIQUE POUR RÉGLER LA PUISSANCE RÉACTIVE D'UNE STATION DE CHAMP INTÉGRÉE POUR UNE ÉOLIENNE, UNE CELLULE PHOTOVOLTAÏQUE ET UNE UNITÉ DE STOCKAGE D'ÉNERGIE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **07.07.2022 CN 202210795093**

(43) Veröffentlichungstag der Anmeldung:
**10.01.2024 Patentblatt 2024/02**

(73) Patentinhaber: **China Three Gorges Co., Ltd. Wuhan Hubei 430010 (CN)**

(72) Erfinder:
• **GU, Yujun**
**Wuhan, Hubei 430010 (CN)**
• **ZOU, Zubing**
**Wuhan, Hubei 430010 (CN)**
• **LIU, Ruikuo**
**Wuhan, Hubei 430010 (CN)**
• **LI, Wei**
**Wuhan, Hubei 430010 (CN)**

(74) Vertreter: **Laufhütte, Dieter**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
CN-A- 113 224 843    CN-A- 114 498 748
US-A1- 2020 203 951

**Beschreibung**

Gebiet der Erfindung

Die vorliegende Anmeldung bezieht sich auf das technische Gebiet der Leistungssteuerung, insbesondere auf ein Verfahren, eine Vorrichtung und eine elektronische Ausrüstung zur Blindleistungseinstellung einer integrierten Feldstation für eine Windkraftanlage, eine Photovoltaik und eine Energiespeichereinheit.

Stand der Technik

Mit der raschen Zunahme der Einzelmaschinenkapazität und der Anzahl der Netzanschlüsse von Windkraftanlage und Photovoltaik im Stromsystem ist das Problem der Blindleistungsverteilung der integrierten Feldstation für die Windkraftanlage, die Photovoltaik und die Energiespeichereinheit kompliziert geworden. Daher ist es zu einem wichtigen Forschungsinhalt geworden, wie die Blindleistungseinstellung an großflächigen integrierten Feldstationen für eine Windkraftanlage, eine Photovoltaik und eine Energiespeichereinheit durchgeführt werden kann.

Der derzeitige Stand der Technik befindet sich immer noch in der Erforschung der Blindleistungseinstellung an Windparkstationen und beinhaltet nicht die Blindleistungseinstellung an großflächigen integrierten Feldstationen für eine Windkraftanlage, eine Photovoltaik und eine Energiespeichereinheit. Wenn das Verfahren zur Blindleistungseinstellung der Windparkstation einfach auf die großflächige integrierte Feldstation für eine Windkraftanlage, eine Photovoltaik und eine Energiespeichereinheit angewendet wird, kann der Blindleistungseinstelleffekt nicht garantiert werden.

US 2020/203951 A1 offenbart ein Energieversorgungsnetz mit verschiedenen Stromlieferanten, darunter Windkraft, Photovoltaik und Batteriespeicher, und das Bereitstellen von reaktiver Leistung aus diesen Quellen unter der Berücksichtigung dadurch entstehender Kosten, u.a. Opportunitätskosten.

Aufgabe der Erfindung

Die vorliegende Anmeldung stellt ein Verfahren, eine Vorrichtung und eine elektronische Ausrüstung zur Blindleistungseinstellung einer integrierten Feldstation für eine Windkraftanlage, eine Photovoltaik und eine Energiespeichereinheit bereit, wodurch die Defekte gelöst werden, dass der Stand der Technik den Blindleistungseinstelleffekt auf die integrierte Feldstation für eine Windkraftanlage, eine Photovoltaik und eine Energiespeichereinheit nicht garantieren kann.

Gemäß dem ersten Aspekt der vorliegenden Anmeldung wird ein Verfahren zur Blindleistungseinstellung einer integrierten Feldstation für eine Windkraftanlage, eine Photovoltaik und eine Energiespeichereinheit bereitgestellt, umfassend:

Erfassen von Leistungsinformationen der integrierten Feldstation für die Windkraftanlage, die Photovoltaik und die Energiespeichereinheit, wobei die Leistungsinformation die Leistungsvorhersagedaten der Windkraftanlage, die Leistungsvorhersagedaten der Photovoltaik und die Leistungsdaten der Energiespeichereinheit umfasst;
Bestimmen der maximal einstellbaren Blindleistung der Windkraftanlage, der Photovoltaik und der Energiespeichereinheit gemäß der Leistungsinformation der integrierten Feldstation für die Windkraftanlage, die Photovoltaik und die Energiespeichereinheit;
Bestimmen mehrerer Blindleistungseinstelllösungen basierend auf voreingestellten Einschränkungen und gemäß der maximal einstellbaren Blindleistung der Windkraftanlage, der Photovoltaik und der Energiespeichereinheit und gemäß der maximal einstellbaren Blindleistung des SVG in der integrierten Feldstation für die Windkraftanlage, die Photovoltaik und die Energiespeichereinheit, wobei die Blindleistungseinstelllösungen eine mit der Windkraftanlage, der Photovoltaik, der Energiespeichereinheit und der SVG entsprechende Blindleistungsleistung umfassen; Bestimmen eines Bewertungsergebnisses jeder Blindleistungseinstelllösung basierend auf einer voreingestellten Bewertungsfunktion und gemäß der mit der Windkraftanlage, der Photovoltaik, der Energiespeichereinheit und der SVG entsprechenden und durch jede Blindleistungsregelungslösung charakterisierten Blindleistungsleistung, wobei das Bewertungsergebnis verwendet wird, um die Blindleistungseinstellkosten zu charakterisieren, die der Blindleistungseinstelllösung entsprechen;
Auswählen einer Ziel-Blindleistungseinstelllösung unter mehreren Blindleistungseinstelllösungen gemäß den Bewertungsergebnissen jeder Blindleistungseinstelllösung und Durchführen einer Blindleistungseinstellung an der integrierten Feldstation für die Windkraftanlage, die Photovoltaik und die Energiespeichereinheit gemäß der Ziel-Blindleistungseinstelllösung.

Wahlweise ist vorgesehen, dass die Leistungsvorhersagedaten der Windkraftanlage einen Wirkleistungsleistungsvorhersagewert der Windkraftanlage umfassen, dass die Leistungsvorhersagedaten der Photovoltaik einen Wirkleistungsleistungsvorhersagewert der Photovoltaik umfassen, dass die Leistungsdaten der Energiespeichereinheit einen Wirkleistungsleistungswert der Energiespeichereinheit umfassen, dass das Bestimmen der maximal einstellbaren Blindleistung der Windkraftanlage, der Photovoltaik und der Energiespeichereinheit gemäß der Leistungsinformation der integrierten Feldstation für die Windkraftanlage, die Photovoltaik und die Energiespeichereinheit, die folgende Schritte umfasst:

Bestimmen einer maximal einstellbaren Blindleistung der Windkraftanlage gemäß dem Wirkleistungsleistungsvorhersagewert der Windkraftanlage und der Nennkapazität der Windkraftanlage;
Bestimmen einer maximal einstellbaren Blindleistung der Photovoltaik gemäß dem Wirkleistungsleistungsvorhersagewert der Photovoltaik und einer Nennkapazität der Photovoltaik;
Bestimmen einer maximal einstellbaren Blindleistung der Energiespeichereinheit gemäß dem Wirkleistungsleistungsvorhersagewert der Energiespeichereinheit und der Nennkapazität der Energiespeichereinheit.

Wahlweise ist vorgesehen, dass das Bestimmen eines Bewertungsergebnisses jeder Blindleistungseinstelllösung basierend auf einer voreingestellten Bewertungsfunktion und gemäß der mit der Windkraftanlage, der Photovoltaik, der Energiespeichereinheit und der SVG entsprechenden und durch jede Blindleistungsregelungslösung charakterisierten Blindleistungsleistung, umfassend:
Bestimmen des äquivalenten wirtschaftlichen Nutzens der Blindleistungseinstelllösung gemäß der Blindleistungsleistung und der Wirkleistungsleistung, die der Windkraftanlage, der Photovoltaik und der Energiespeichereinheit entsprechen, die durch die Blindleistungseinstelllösung für jede der Blindleistungseinstelllösungen charakterisiert sind;
Dass das Bestimmen des Bewertungsergebnisses der Blindleistungseinstelllösung basierend auf der voreingestellten Bewertungsfunktion und gemäß dem äquivalenten wirtschaftlichen Nutzen der Blindleistungseinstelllösung, der Blindleistungsleistung der SVG und dem Netzwerkverlust, der der integrierten Feldstation für die Windkraftanlage, die Photovoltaik und die Energiespeichereinheit entspricht. Wahlweise ist vorgesehen, dass das Bestimmen des äquivalenten wirtschaftlichen Nutzens der Blindleistungseinstelllösung gemäß der Blindleistungsleistung und der Wirkleistungsleistung, die der Windkraftanlage, der Photovoltaik und der Energiespeichereinheit entsprechen, die durch die Blindleistungseinstelllösung charakterisiert sind, die folgenden Schritte umfasst:

Berechnen des äquivalenten wirtschaftlichen Nutzens der Blindleistungseinstelllösung gemäß der folgenden Formel:

$$P_{\text{replace}} = -k_1 k_2 \left( Q_{\text{wind}} + Q_{\text{PV}} + Q_{\text{battery}} \right)$$

Dabei $P_{\text{replace}}$ den äquivalenten wirtschaftlichen Nutzen der Blindleistungseinstelllösung darstellt, $Q_{\text{wind}}$ die Blindleistungsleistung der Windkraftanlage darstellt, $Q_{\text{PV}}$ die Blindleistungsleistung der Photovoltaik darstellt, $Q_{\text{battery}}$ die Blindleistungsleistung der Energiespeichereinheit darstellt, $k_1$ den Umwandlungskoeffizienten der Blindleistungsleistung zu den SVG-Kosten darstellt und $k_2$ den Umwandlungskoeffizienten der SVG-Kosten zu der Wirkleistungsleistung darstellt;
Wahlweise ist vorgesehen, dass das Bestimmen des Bewertungsergebnisses der Blindleistungseinstelllösung basierend auf der voreingestellten Bewertungsfunktion und gemäß dem äquivalenten wirtschaftlichen Nutzen der Blindleistungseinstelllösung, der Blindleistungsleistung der SVG und dem Netzwerkverlust, der der integrierten Feldstation für die Windkraftanlage, die Photovoltaik und die Energiespeichereinheit entspricht, die folgenden Schritte umfasst:

Bestimmen eines Bewertungsergebnisses der Blindleistungseinstelllösung basierend auf der folgenden Bewertungsfunktion und gemäß dem äquivalenten wirtschaftlichen Nutzen der Blindleistungseinstelllösung, der Blindleistungsleistung der SVG und dem Netzwerkverlust, der der integrierten Feldstation für die Windkraftanlage, die Photovoltaik und die Energiespeichereinheit entspricht;

$$f\left( Q_{\text{wind}}, Q_{\text{PV}}, Q_{\text{battery}}, Q_{\text{SVG}} \right) = P_{\text{loss\_group}} + \lambda_1 P_{\text{replace}} + \lambda_2 k_1 k_2 Q_{\text{SVG}}$$

$$\begin{cases} \lambda_1 = \dfrac{P_{\text{wind}} + P_{\text{PV}} + P_{\text{battery}}}{S_{\text{wind\_N}} + S_{\text{PV\_N}} + S_{\text{battery\_N}}} \\ \lambda_2 = \dfrac{Q_{\text{SVG}}}{Q_{\text{SVG\_max}}} \end{cases}$$

Dabei f ($Q_{wind}$, $Q_{PV}$, $Q_{battery}$, $Q_{SVG}$) das Bewertungsergebnis der Blindleistungseinstelllösung darstellt, $P_{loss\_group}$ den Netzwerkverlust darstellt, der der integrierten Feldstation für die Windkraftanlage, die Photovoltaik und die Energiespeichereinheit entspricht, $Q_{SVG}$ die Blindleistungsleistung der SVG darstellt, $\lambda_1$ den Verdrängungskoeffizienten der Blindleistungskapazität der SVG darstellt, $\lambda_2$ den Gewichtskoeffizienten der Blindleistungsleistung der SVG darstellt, $P_{wind}$ die Wirkleistungsleistung der Windkraftanlage darstellt, $P_{PV}$ die Wirkleistungsleistung der Photovoltaik darstellt, $P_{battery}$ die Wirkleistungsleistung der Energiespeichereinheit darstellt, $S_{wind\_N}$ die Nennkapazität der Windkraftanlage darstellt, $S_{PV\_N}$ die Nennkapazität der Photovoltaik darstellt, $S_{battery\_N}$ die Nennkapazität der Energiespeichereinheit darstellt und $Q_{SVG\_max}$ die maximal einstellbare Blindleistung der SVG darstellt.

Wahlweise ist vorgesehen, dass das Verfahren auch die folgenden Schritte umfasst: Bestimmen eines Netzwerkverlusts, der der integrierten Feldstation für die Windkraftanlage, die Photovoltaik und die Energiespeichereinheit entspricht, gemäß der folgenden Formel:

$$P_{loss\_group} = \sum_{i=1}^{N_T} G_{Ti} U_i^2 + \sum_{j=1}^{N_L} R_j \frac{P_j^2 + Q_j^2}{U_j^2}$$

Dabei $N_T$ die Gesamtmenge an Transformatoren der integrierten Feldstation für die Windkraftanlage, die Photovoltaik und die Energiespeichereinheit darstellt, $N_L$ die Gesamtmenge an Kollektorleitungen der integrierten Feldstation für die Windkraftanlage, die Photovoltaik und die Energiespeichereinheit darstellt, $G_{Ti}$ die Leitfähigkeit des i-ten Transformators darstellt, $U_i$ die Spannung des Knotens darstellt, in dem sich der i-te Transformator befindet, $R_j$ den Widerstand der j-Leitung darstellt, $U_j$ die Spannung des Zielknotens auf der j-Leitung darstellt, $P_j$ die Wirkleistung darstellt, die von dem Zielknoten injiziert wird, und $Q_j$ die Blindleistung darstellt, die von dem Zielknoten injiziert wird.

Wahlweise ist vorgesehen, dass das Bestimmen mehrerer Blindleistungseinstelllösungen basierend auf voreingestellten Einschränkungen und gemäß der maximal einstellbaren Blindleistung der Windkraftanlage, der Photovoltaik und der Energiespeichereinheit und gemäß der maximal einstellbaren Blindleistung des SVG in der integrierten Feldstation für die Windkraftanlage, die Photovoltaik und die Energiespeichereinheit, die folgende Schritte umfasst:

Bestimmen eines Satzes von den anfänglichen Blindleistungseinstelllösungen basierend auf voreingestellten Einschränkungen und gemäß der maximal einstellbaren Blindleistung der Windkraftanlage, der Photovoltaik und der Energiespeichereinheit und der maximal einstellbaren Blindleistung des SVG in der integrierten Feldstation für die Windkraftanlage, die Photovoltaik und die Energiespeichereinheit;
Bestimmen eines Netzwerkverlusts, der jeder anfänglichen Blindleistungseinstelllösung in dem Satz von den anfänglichen Blindleistungseinstelllösungen entspricht;
Auswählen mehrerer Blindleistungseinstelllösungen in einem Satz von den anfänglichen Blindleistungseinstelllösungen gemäß dem Netzwerkverlust, der jeder der anfänglichen Blindleistungseinstelllösungen entspricht.

Gemäß dem zweiten Aspekt der vorliegenden Anmeldung wird eine Vorrichtung zur Blindleistungseinstellung einer integrierten Feldstation für eine Windkraftanlage, eine Photovoltaik und eine Energiespeichereinheit bereitgestellt, umfassend:

ein Erfassungsmodul zum Erfassen von Leistungsinformationen der integrierten Feldstation für die Windkraftanlage, die Photovoltaik und die Energiespeichereinheit, wobei die Leistungsinformation die Leistungsvorhersagedaten der Windkraftanlage, die Leistungsvorhersagedaten der Photovoltaik und die Leistungsdaten der Energiespeichereinheit umfasst;
ein erstes Bestimmungsmodul zum Bestimmen der maximal einstellbaren Blindleistung der Windkraftanlage, der Photovoltaik und der Energiespeichereinheit gemäß der Leistungsinformation der integrierten Feldstation für die Windkraftanlage, die Photovoltaik und die Energiespeichereinheit;
ein zweites Bestimmungsmodul zum Bestimmen mehrerer Blindleistungseinstelllösungen basierend auf voreingestellten Einschränkungen und gemäß der maximal einstellbaren Blindleistung der Windkraftanlage, der Photovoltaik und der Energiespeichereinheit und gemäß der maximal einstellbaren Blindleistung des SVG in der integrierten Feldstation für die Windkraftanlage, die Photovoltaik und die Energiespeichereinheit, wobei die Blindleistungseinstelllösungen eine mit der Windkraftanlage, der Photovoltaik, der Energiespeichereinheit und der SVG entsprechende Blindleistungsleistung umfassen;
ein Bewertungsmodul zum Bestimmen eines Bewertungsergebnisses jeder Blindleistungseinstelllösung basierend auf einer voreingestellten Bewertungsfunktion und gemäß der mit der Windkraftanlage, der Photovoltaik, der Energiespeichereinheit und der SVG entsprechenden und durch jede Blindleistungsregelungslösung charakterisierten Blindleistungsleistung, wobei das Bewertungsergebnis verwendet wird, um die Blindleistungseinstellkosten zu charakterisieren, die der Blindleistungseinstelllösung entsprechen;
ein Einstellmodul zum Auswählen der Ziel-Blindleistungseinstelllösung in mehreren Blindleistungseinstelllösungen gemäß den Bewertungsergebnissen jeder Blindleistungseinstelllösung und zum Durchführen einer Blindleistungseinstellung an der integrierten Feldstation für die Windkraftanlage, die Photovoltaik und die Energiespeicher gemäß der Ziel-Blindleistungseinstelllösung.

Wahlweise ist vorgesehen, dass die Leistungsvorhersagedaten der Windkraftanlage einen Wirkleistungsleistungsvorhersagewert der Windkraftanlage umfassen, dass die Leistungsvorhersagedaten der Photovoltaik einen Wirkleistungsleistungsvorhersagewert der Photovoltaik umfassen, dass die Leistungsdaten der Energiespeichereinheit einen Wirkleistungsleistungswert der Energiespeichereinheit umfassen, dass das erste Bestimmungsmodul wird speziell dafür verwendet:

Bestimmen einer maximal einstellbaren Blindleistung der Windkraftanlage gemäß dem Wirkleistungsleistungsvorhersagewert der Windkraftanlage und der Nennkapazität der Windkraftanlage;
Bestimmen einer maximal einstellbaren Blindleistung der Photovoltaik gemäß dem Wirkleistungsleistungsvorhersagewert der Photovoltaik und einer Nennkapazität der Photovoltaik;
Bestimmen einer maximal einstellbaren Blindleistung der Energiespeichereinheit gemäß dem Wirkleistungsleistungsvorhersagewert der Energiespeichereinheit und der Nennkapazität der Energiespeichereinheit.
Wahlweise ist vorgesehen, dass das Bewertungsmodul speziell dafür verwendet wird: Bestimmen des äquivalenten wirtschaftlichen Nutzens der Blindleistungseinstelllösung gemäß der Blindleistungsleistung und der Wirkleistungsleistung, die der Windkraftanlage, der Photovoltaik und der Energiespeichereinheit entsprechen, die durch die Blindleistungseinstelllösung für jede der Blindleistungseinstelllösungen charakterisiert sind;

Dass das Bestimmen des Bewertungsergebnisses der Blindleistungseinstelllösung basierend auf der voreingestellten Bewertungsfunktion und gemäß dem äquivalenten wirtschaftlichen Nutzen der Blindleistungseinstelllösung, der Blindleistungsleistung der SVG und dem Netzwerkverlust, der der integrierten Feldstation für die Windkraftanlage, die Photovoltaik und die Energiespeichereinheit entspricht. Wahlweise ist vorgesehen, dass das Bewertungsmodul speziell dafür verwendet wird: Berechnen des äquivalenten wirtschaftlichen Nutzens der Blindleistungseinstelllösung gemäß der folgenden Formel:

$$P_{\text{replace}} = -k_1 k_2 \left( Q_{\text{wind}} + Q_{\text{PV}} + Q_{\text{battery}} \right)$$

Dabei $P_{\text{replace}}$ den äquivalenten wirtschaftlichen Nutzen der Blindleistungseinstelllösung darstellt, $Q_{\text{wind}}$ die Blindleistungsleistung der Windkraftanlage darstellt, $Q_{\text{PV}}$ die Blindleistungsleistung der Photovoltaik darstellt, $Q_{\text{battery}}$ die Blindleistungsleistung der Energiespeichereinheit darstellt, $k_1$ den Umwandlungskoeffizienten der Blindleistungsleistung zu den SVG-Kosten darstellt und $k_2$ den Umwandlungskoeffizienten der SVG-Kosten zu der Wirkleistungsleistung darstellt;

Wahlweise ist vorgesehen, dass das Bewertungsmodul speziell dafür verwendet wird: Bestimmen eines Bewertungsergebnisses der Blindleistungseinstelllösung basierend auf der folgenden Bewertungsfunktion und gemäß dem äquivalenten wirtschaftlichen Nutzen der Blindleistungseinstelllösung, der Blindleistungsleistung der SVG und dem Netzwerkverlust, der der integrierten Feldstation für die Windkraftanlage, die Photovoltaik und die Energiespeichereinheit entspricht;

$$f\left( Q_{\text{wind}}, Q_{\text{PV}}, Q_{\text{battery}}, Q_{\text{SVG}} \right) = P_{\text{loss\_group}} + \lambda_1 P_{\text{replace}} + \lambda_2 k_1 k_2 Q_{\text{SVG}}$$

$$\begin{cases} \lambda_1 = \dfrac{P_{\text{wind}} + P_{\text{PV}} + P_{\text{battery}}}{S_{\text{wind\_N}} + S_{\text{PV\_N}} + S_{\text{battery\_N}}} \\[2em] \lambda_2 = \dfrac{Q_{\text{SVG}}}{Q_{\text{SVG\_max}}} \end{cases}$$

Dabei $f\left( Q_{\text{wind}}, Q_{\text{PV}}, Q_{\text{battery}}, Q_{\text{SVG}} \right)$ das Bewertungsergebnis der Blindleistungseinstelllösung darstellt, $P_{\text{loss\_group}}$ den Netzwerkverlust darstellt, der der integrierten Feldstation für die Windkraftanlage, die Photovoltaik und die Energiespeichereinheit entspricht, $Q_{\text{SVG}}$ die Blindleistungsleistung der SVG darstellt, $\lambda_1$ den Verdrängungskoeffizienten der Blindleistungskapazität der SVG darstellt, $\lambda_2$ den Gewichtskoeffizienten der Blindleistungsleistung der SVG darstellt, $P_{wind}$ die Wirkleistungsleistung der Windkraftanlage darstellt, $P_{PV}$ die Wirkleistungsleistung der Photovoltaik darstellt, $P_{battery}$ die Wirkleistungsleistung der Energiespeichereinheit darstellt, $S_{wind\_N}$ die Nennkapazität der Windkraftanlage darstellt, $S_{PV\_N}$ die Nennkapazität der Photovoltaik darstellt, $S_{battery\_N}$ die Nennkapazität der Energiespeichereinheit darstellt und $Q_{SVG\_max}$ die maximal einstellbare Blindleistung der SVG darstellt.

Wahlweise ist vorgesehen, dass die Vorrichtung auch die folgenden Komponenten umfasst: ein Netzwerkverlustbestimmungsmodul zum Bestimmen des Netzwerkverlusts entsprechend der integrierten Feldstation für die Windkraftanlage, die Photovoltaik und die Energiespeichereinheit gemäß der folgenden Formel:

$$P_{loss\_group} = \sum_{i=1}^{N_T} G_{Ti} U_i^2 + \sum_{j=1}^{N_L} R_j \frac{P_j^2 + Q_j^2}{U_j^2}$$

Dabei $N_T$ die Gesamtmenge an Transformatoren der integrierten Feldstation für die Windkraftanlage, die Photovoltaik und die Energiespeichereinheit darstellt, $N_L$ die Gesamtmenge an Kollektorleitungen der integrierten Feldstation für die Windkraftanlage, die Photovoltaik und die Energiespeichereinheit darstellt, Gri die Leitfähigkeit des i-ten Transformators darstellt, $U_i$ die Spannung des Knotens darstellt, in dem sich der i-te Transformator befindet, $R_j$ den Widerstand der j-Leitung darstellt, $U_j$ die Spannung des Zielknotens auf der j-Leitung darstellt, $P_j$ die Wirkleistung darstellt, die von dem Zielknoten injiziert wird, und $Q_j$ die Blindleistung darstellt, die von dem Zielknoten injiziert wird.

Wahlweise ist vorgesehen, dass das zweite Bestimmungsmodul wird speziell dafür verwendet:

Bestimmen eines Satzes von den anfänglichen Blindleistungseinstelllösungen basierend auf voreingestellten Einschränkungen und gemäß der maximal einstellbaren Blindleistung der Windkraftanlage, der Photovoltaik und der Energiespeichereinheit und der maximal einstellbaren Blindleistung des SVG in der integrierten Feldstation für die Windkraftanlage, die Photovoltaik und die Energiespeichereinheit;
Bestimmen eines Netzwerkverlusts, der jeder anfänglichen Blindleistungseinstelllösung in dem Satz von den anfänglichen Blindleistungseinstelllösungen entspricht;
Auswählen mehrerer Blindleistungseinstelllösungen in einem Satz von den anfänglichen Blindleistungseinstelllösungen gemäß dem Netzwerkverlust, der jeder der anfänglichen Blindleistungseinstelllösungen entspricht.
Gemäß dem dritten Aspekt der vorliegenden Anmeldung wird eine elektronische Ausrüstung bereitgestellt, umfassend mindestens einen Prozessor und einen Speicher, dass der Speicher einen Computerausführungsbefehl speichert,
dass der mindestens eine Prozessor den im Speicher gespeicherten Computerausführungsbefehl ausführt, so dass der mindestens eine Prozessor das Verfahren gemäß dem ersten Aspekt und gemäß verschiedenen möglichen Ausgestaltungen des ersten Aspekts ausführt.

Gemäß dem vierten Aspekt der vorliegenden Anmeldung wird ein computerlesbares Speichermedium bereitgestellt, dass Computerausführungsbefehle in dem computerlesbaren Speichermedium gespeichert sind, wodurch ein Verfahren gemäß dem ersten Aspekt und gemäß verschiedenen möglichen Ausgestaltungen des ersten Aspekts ausgeführt wird, wenn der Prozessor den Computerausführungsbefehl ausführt.

Die technische Lösung der vorliegenden Anmeldung hat folgende Vorteile:
Die vorliegende Anmeldung stellt ein Verfahren, eine Vorrichtung und eine elektronische Ausrüstung zur Blindleistungseinstellung einer integrierten Feldstation für eine Windkraftanlage, eine Photovoltaik und eine Energiespeichereinheit bereit, umfassend die folgenden Schritte: Erfassen von Leistungsinformationen der integrierten Feldstation für die Windkraftanlage, die Photovoltaik und die Energiespeichereinheit, wobei die Leistungsinformation die Leistungsvorhersagedaten der Windkraftanlage, die Leistungsvorhersagedaten der Photovoltaik und die Leistungsdaten der Energiespeichereinheit umfasst; Bestimmen der maximal einstellbaren Blindleistung der Windkraftanlage, der Photovoltaik und der Energiespeichereinheit gemäß der Leistungsinformation der integrierten Feldstation für die Windkraftanlage, die Photovoltaik und die Energiespeichereinheit; Bestimmen mehrerer Blindleistungseinstelllösungen basierend auf voreingestellten Einschränkungen und gemäß der maximal einstellbaren Blindleistung der Windkraftanlage, der Photovoltaik und der Energiespeichereinheit und gemäß der maximal einstellbaren Blindleistung des SVG in der integrierten Feldstation für die Windkraftanlage, die Photovoltaik und die Energiespeichereinheit, wobei die Blindleistungseinstelllösungen eine mit der Windkraftanlage, der Photovoltaik, der Energiespeichereinheit und der SVG entsprechende Blindleistungsleistung umfassen; Bestimmen eines Bewertungsergebnisses jeder Blindleistungseinstelllösung basierend auf einer voreingestellten Bewertungsfunktion und gemäß der mit der Windkraftanlage, der Photovoltaik, der Energiespeichereinheit und der SVG entsprechenden und durch jede Blindleistungsregelungslösung charakterisierten Blindleistungsleistung, wobei das Bewertungsergebnis verwendet wird, um die Blindleistungseinstellkosten zu charakterisieren, die der Blindleistungseinstelllösung entsprechen; ein Einstellmodul zum Auswählen der Ziel-Blindleistungseinstelllösung in mehreren Blindleistungseinstelllösungen gemäß den Bewertungergebnissen jeder Blindleistungs-einstelllösung und zum Durchführen einer Blindleistungseinstellung an der integrierten Feldstation für die Windkraftanlage, die Photovoltaik und die Energiespeicher gemäß der Ziel-Blindleistungseinstelllösung. Das Verfahren gemäß der obigen Lösung ist ein Blindleistungseinstellverfahren, das für dieses Anwendungsszenario der integrierten Feldstation für die Windkraftanlage, die Photovoltaik und die Energiespeichereinheit bereitgestellt wird. Durch die Koordinierung der Blindleistungsleistung von Windkraftanlagen, Photovoltaik, Energiespeichereinheiten und SVG mit dem Ziel, die Blindleistungseinstellkosten zu reduzieren, wird die Blindleistungseinstellfähigkeit der Windkraftanlage, der Photovoltaik und der Energiespeichereinheit voll ausgeschöpft, wodurch die Blindleistungseinstellkosten reduziert werden, während der Blindleistungseinstelleffekt der integrierten Feldstation für die Windkraftanlage, die Photovoltaik und die Energiespeichereinheit sichergestellt wird.

Kurzbeschreibung der Zeichnungen

Um die Ausführungsbeispiele der vorliegenden Anmeldung oder die technischen Lösungen im Stand der Technik klarer zu beschreiben, werden die Zeichnungen, die in den Ausführungsbeispielen oder der Beschreibung des Standes der Technik zu verwenden sind, nachstehend kurz beschrieben. Offensichtlich sind die Zeichnungen in der folgenden Beschreibung einige Ausführungsbeispiele der vorliegenden Anmeldung. Der gewöhnliche Fachmann kann auch andere Zeichnungen auf der Grundlage dieser Zeichnungen erhalten.

Fig. 1 ist ein schematisches Diagramm einer Struktur eines Systems zur Blindleistungseinstellung einer integrierten Feldstation für eine Windkraftanlage, eine Photovoltaik und eine Energiespeichereinheit gemäß einem Ausführungsbeispiel der vorliegenden Anwendung;
Fig. 2 ist ein schematisches Flussdiagramm eines Verfahrens zur Blindleistungseinstellung einer integrierten Feldstation für eine Windkraftanlage, eine Photovoltaik und eine Energiespeichereinheit gemäß einem Ausführungsbeispiel der vorliegenden Anwendung;
Fig. 3 ist ein schematisches Diagramm einer Struktur einer Vorrichtung zur Blindleistungseinstellung einer integrierten Feldstation für eine Windkraftanlage, eine Photovoltaik und eine Energiespeichereinheit gemäß einem Ausführungsbeispiel der vorliegenden Anwendung;
Fig. 4 ist ein schematisches Diagramm einer Struktur einer elektronischen Ausrüstung gemäß einem Ausführungsbeispiel der vorliegenden Anwendung.

Spezifische Ausführungsbeispiele der vorliegenden Anmeldung wurden durch die obigen Zeichnungen gezeigt, die später ausführlicher beschrieben werden. Diese Zeichnungen und Textbeschreibungen dienen nicht dazu, den Umfang der offenbarten Idee in irgendeiner Weise einzuschränken, sondern den Begriff der vorliegenden Anmeldung für den Fachmann durch Bezugnahme auf bestimmte Ausführungsbeispiele zu veranschaulichen.

Beschreibung der bevorzugten Ausführungsbeispiele

Um den Zweck, die technische Lösung und die Vorteile der Ausführungsbeispiele der vorliegenden Anmeldung klarer zu machen, wird die technische Lösung in den Ausführungsbeispielen der vorliegenden Anmeldung im Folgenden in Verbindung mit den Zeichnungen in den Ausführungsbeispielen der vorliegenden Anmeldung klar und vollständig beschrieben. Offensichtlich sind die beschriebenen Ausführungsbeispiele einige Ausführungsbeispiele und nicht alle Ausführungsbeispiele der vorliegenden Anmeldung. Auf der Grundlage der Ausführungsbeispiele in der vorliegenden Anmeldung fallen alle anderen Ausführungsbeispiele, die der Fachmann ohne kreative Arbeit erhalten hat, in den Schutzbereich der vorliegenden Anmeldung.
Darüber hinaus werden die Begriffe Erst, Zweit usw. nur zu Beschreibungszwecken verwendet und können nicht so verstanden werden, dass sie die relative Bedeutung angeben oder implizieren oder implizit die Anzahl der angegebenen technischen Merkmale angeben. In der Beschreibung der folgenden Ausführungsbeispiele ist die Bedeutung von mehreren mehr als zwei, sofern nicht ausdrücklich und spezifisch anders definiert.
Mit der raschen Zunahme der Einzelmaschinenkapazität und der Anzahl der Netzanschlüsse von Windkraftanlage und Photovoltaik ist das Problem der Blindleistungsverteilung des Stromsystems kompliziert geworden. Gegenwärtig wurden die Einzelmaschinenkapazität und die Anzahl der Einheiten von großflächigen Onshore-Windparkstationen im Vergleich zur Vergangenheit erheblich verbessert. Auch doppelt gespeiste Induktionswindkraftanlagen mit einer Einzelmaschinenkapazität von bis zu 5,5 MW wurden in einigen Gebieten schrittweise in Betrieb genommen.
Die meisten der bestehenden Blindleistungseinstelltechnologien führen nur eine Blindleistungsoptimierung für großflächige Windparkstationen (Gruppen) durch und beinhalten keine Blindleistungsoptimierung für Onshore-Feldstationen (Gruppen) für eine Windkraftanlage, eine Photovoltaik und eine Energiespeichereinheit. Darüber hinaus berücksichtigt die Blindleistungsoptimierung der Windkraftanlage nicht die Koordination mit anderen Blindleistungskompensationsvorrichtungen in der Feldstation (Gruppe) und die Optimierung der Investitions- und Betriebskosten, was diese Optimierungsalgorithmen stark einschränkt. Um die in der vorliegenden Anmeldung gelösten technischen Probleme zu erläutern, wird folgende Analyse durchgeführt:

(1) Gegenwärtig ist die neu gebaute integrierte Feldstation (Gruppe) für eine Windkraftanlage, eine Photovoltaik und eine Energiespeichereinheit im Allgemeinen eine Cluster-Netzanbindung mit großer Kapazität und weist die Merkmale einer größeren Einzelmaschinenkapazität und einer breiteren Bodenfläche auf, so dass die Kollektorleitung der Feldstation (Gruppe) eine längere Länge und eine kompliziertere Topologie aufweist.

(2) Um den Einfluss der Volatilität, Zufälligkeit und Intermittierbarkeit der Leistung neuer Energie auf die Betriebsstabilität der Feldstation (Gruppe) zu unterdrücken und zu bewältigen, sind die meisten Energiespeichereinheiten mit großer Kapazität und Blindleistungskompensationsvorrichtungen SVG in der integrierten Feldstation (Gruppe) für eine Windkraftanlage, eine Photovoltaik und eine Energiespeichereinheit angeordnet. Der derzeitige Stand der Technik verbessert jedoch nicht die Betriebsökonomie der Feldstation durch koordinierte Optimierungssteuerung aus der Perspektive der Blindleistungsoptimierung und der Vorhersage der Leistung von Windkraftanlage und Photovoltaik.

(3) Die integrierte Feldstation (Gruppe) für eine Windkraftanlage, eine Photovoltaik und eine Energiespeichereinheit ist mit Energieerzeugungseinheiten für eine Windkraftanlage, eine Photovoltaik und eine Energiespeichereinheit mit großer Kapazität ausgestattet. Die Gemeinsamkeit besteht darin, dass der leistungselektronische Wandler an das Netz angeschlossen ist, so dass eine kontinuierliche Blindleistungseinstellung durch das Leistungssteuerungssystem erreicht werden kann, was sich günstig auf den lokalen Blindleistungsausgleich der Feldstation (Gruppe) auswirkt. Die Steuerungskoordination der drei ist jedoch sehr kompliziert, und es ist auch notwendig, die Koordinationsbeziehung von üblicherweise verwendeten Blindleistungskompensationsvorrichtungen wie SVG zu berücksichtigen, was eine große Herausforderung für die Blindleistungseinstellung der integrierten Feldstation für die Windkraftanlage, die Photovoltaik und die Energiespeichereinheit darstellt.

(4) Die meisten Blindleistungsoptimierungsverfahren für Windparkstation sind nur für Netzverluste optimiert und wurden nicht gemäß den Merkmalen der aktuellen neuen Energiefeldstationen (Gruppen) verbessert und sind nicht mehr anwendbar.

Im Hinblick auf die Blindleistungsoptimierung der großflächigen integrierten Onshore-Feldstation (Gruppe) für eine Windkraftanlage, eine Photovoltaik und eine Energiespeichereinheit müssen die Blindleistungsanpassungsmittel, Blindleistungsoptimierungsziele und Blindleistungsoptimierungsverfahren der Feldstation (Gruppe) separat berücksichtigt werden. Diese Aspekte werden nachfolgend jeweils erläutert.

Erstens können in der großflächigen integrierten Feldstation (Gruppe) für eine Windkraftanlage, eine Photovoltaik und eine Energiespeichereinheit Windkraftanlagen, Photovoltaik, Energiespeichereinheiten, SVG und Aufwärtstransformatoren der Feldstationen (Gruppen) an der Blindleistungseinstellung teilnehmen, so dass der Blindleistungseinstellmechanismus von Windkraftanlage, Photovoltaik, Energiespeichereinheit und SVG gleich ist. Das heißt, die Blindleistung, die von dem Wandler ausgegeben wird, wird durch leistungselektronische Technologie gesteuert, so dass die induktive Blindleistung oder die kapazitive Blindleistung, die von dem Wandler ausgegeben wird, entsprechend den Anforderungen gesteuert wird und die Blindleistung kontinuierlich innerhalb eines bestimmten Bereichs eingestellt werden kann. Im Gegensatz dazu ändert sich durch die Einstellung der Abzweigung des Aufwärtstransformators lediglich die Verteilung der Blindleistung des regionalen Stromnetzes, das keine Blindleistung abgeben kann. Und aufgrund der diskontinuierlichen Einstellung der Abzweigung und der hohen Einstellkosten ist der Optimierungseffekt der Blindleistung innerhalb der Feldstation (Gruppe) sehr begrenzt. Daher wird für die Blindleistungsoptimierung der großflächigen integrierten Feldstation (Gruppe) für eine Windkraftanlage, eine Photovoltaik und eine Energiespeichereinheit der Einfluss der Abzweigung des Aufwärtstransformators nicht berücksichtigt.

Aufgrund der Unsicherheit der Ausgangsleistung von Windkraftanlagen und Photovoltaik weist die Blindleistungseinstellung jedoch große Einschränkungen auf. Wenn die Wirkleistung der Windkraftanlage und der Photovoltaik groß ist, ist die entsprechende Blindleistungseinstellfähigkeit gering. Wenn die Leistung der Windkraftanlage und der Photovoltaik klein ist, ist die entsprechende Blindleistungseinstellfähigkeit groß. Die Hauptrolle des Energiespeichers in der integrierten Feldstation (Gruppe) für eine Windkraftanlage, eine Photovoltaik und eine Energiespeichereinheit besteht darin, das Gleichgewicht der Wirkleistung zu erreichen, so dass eine übermäßige Beteiligung an der Blindleistung die Wirkleistungseinstellung beeinflusst. Als leistungselektronisches Gerät mit Blindleistungskompensation als Hauptsteuerungsziel kann SVG eine kontinuierliche Einstellung der Blindleistung erreichen. Die hohen Kosten schränken jedoch ihre Anwendung in neuen Stromsystemen mit neuer Energie als Hauptorgan in der Zukunft ein. Zusammenfassend muss die Blindleistungsoptimierung der integrierten Feldstation (Gruppe) für eine Windkraftanlage, eine Photovoltaik und eine Energiespeichereinheit umfassend die Vor- und Nachteile der oben genannten Blindleistungseinstellungsausrüstung für die koordinierte Optimierungssteuerung berücksichtigen.

Zweitens besteht das Ziel der herkömmlichen Blindleistungsoptimierung darin, den geringsten Wirknetzverlust zu haben. Aber die großflächige integrierte Feldstation (Gruppe) für eine Windkraftanlage, eine Photovoltaik und eine Energiespeichereinheit unterscheidet sich stark von herkömmlichen Kraftwerken und sogar regionalen Stromsystemen in Bezug auf Energieeingangsform, Netzanschlussverfahren und Topologie. Daher kann auf der Grundlage des geringsten Wirknetzverlusts berücksichtigt werden, dass die Investitionskosten in Strom umgewandelt werden können, so dass die Blindleistungseinstellkosten durch zusätzliche Gewichte in das Blindleistungsoptimierungsziel integriert werden können.

Angesichts der obigen Probleme werden gemäß den Ausführungsbeispielen der vorliegenden Anmeldung ein Verfahren, eine Vorrichtung und eine elektronische Ausrüstung zur Blindleistungseinstellung einer integrierten Feldstation für eine Windkraftanlage, eine Photovoltaik und eine Energiespeichereinheit bereitgestellt, umfassend die folgenden Schritte: Erfassen von Leistungsinformationen der integrierten Feldstation für die Windkraftanlage, die Photovoltaik und die Energiespeichereinheit, wobei die Leistungsinformation die Leistungsvorhersagedaten der Windkraftanlage, die Leistungsvorhersagedaten der Photovoltaik und die Leistungsdaten der Energiespeichereinheit umfasst; Bestimmen der maximal einstellbaren Blindleistung der Windkraftanlage, der Photovoltaik und der Energiespeichereinheit gemäß der Leistungsinformation der integrierten Feldstation für die Windkraftanlage, die Photovoltaik und die Energiespeichereinheit; Bestimmen mehrerer Blindleistungseinstelllösungen basierend auf voreingestellten Einschränkungen und gemäß der maximal einstellbaren Blindleistung der Windkraftanlage, der Photovoltaik und der Energiespeichereinheit und gemäß der maximal einstellbaren Blindleistung des SVG in der integrierten Feldstation für die Windkraftanlage, die Photovoltaik und die Energiespeichereinheit, wobei die Blindleistungseinstelllösungen eine mit der Windkraftanlage, der Photovoltaik, der Energiespeichereinheit und der SVG entsprechende Blindleistungsleistung umfassen; Bestimmen eines Bewertungsergebnisses jeder Blindleistungseinstelllösung basierend auf einer voreingestellten Bewertungsfunktion und gemäß der mit der Windkraftanlage, der Photovoltaik, der Energiespeichereinheit und der SVG entsprechenden und durch jede Blindleistungsregelungslösung charakterisierten Blindleistungsleistung, wobei das Bewertungsergebnis verwendet wird, um die Blindleistungseinstellkosten zu charakterisieren, die der Blindleistungseinstelllösung entsprechen; ein Einstellmodul zum Auswählen der Ziel-Blindleistungseinstelllösung in mehreren Blindleistungseinstelllösungen gemäß den Bewertungsergebnissen jeder Blindleistungseinstelllösung und zum Durchführen einer Blindleistungseinstellung an der integrierten Feldstation für die Windkraftanlage, die Photovoltaik und die Energiespeicher gemäß der Ziel-Blindleistungseinstelllösung. Das Verfahren gemäß der obigen Lösung ist ein Blindleistungseinstellverfahren, das für dieses Anwendungsszenario der integrierten Feldstation für die Windkraftanlage, die Photovoltaik und die Energiespeichereinheit bereitgestellt wird. Durch die Koordinierung der Blindleistungsleistung von Windkraftanlagen, Photovoltaik, Energiespeichereinheiten und SVG mit dem Ziel, die Blindleistungseinstellkosten zu reduzieren, wird die Blindleistungseinstellfähigkeit der Windkraftanlage, der Photovoltaik und der Energiespeichereinheit voll ausgeschöpft, wodurch die Blindleistungseinstellkosten reduziert werden, während der Blindleistungseinstelleffekt der integrierten Feldstation für die Windkraftanlage, die Photovoltaik und die Energiespeichereinheit sichergestellt wird.

Die folgenden spezifischen Ausführungsbeispiele können miteinander kombiniert werden, so dass die gleichen oder ähnlichen Konzepte oder Prozesse in einigen Ausführungsbeispielen nicht wiederholt werden können. Die Ausführungsbeispiele der vorliegenden Anmeldung werden nachstehend in Verbindung mit den Zeichnungen beschrieben.

Zunächst wird die Struktur des Blindleistungseinstellsystems der integrierten Feldstation für die Windkraftanlage, die Photovoltaik und die Energiespeichereinheit gemäß der vorliegenden Anmeldung beschrieben:
Gemäß den Ausführungsbeispielen der vorliegenden Anmeldung werden ein Verfahren, eine Vorrichtung und eine elektronische Ausrüstung zur Blindleistungseinstellung einer integrierten Feldstation für eine Windkraftanlage, eine Photovoltaik und eine Energiespeichereinheit bereitgestellt, die für die Blindleistungsoptimierungseinstellung der großflächigen integrierten Feldstation für eine Windkraftanlage, eine Photovoltaik und eine Energiespeichereinheit geeignet sind.

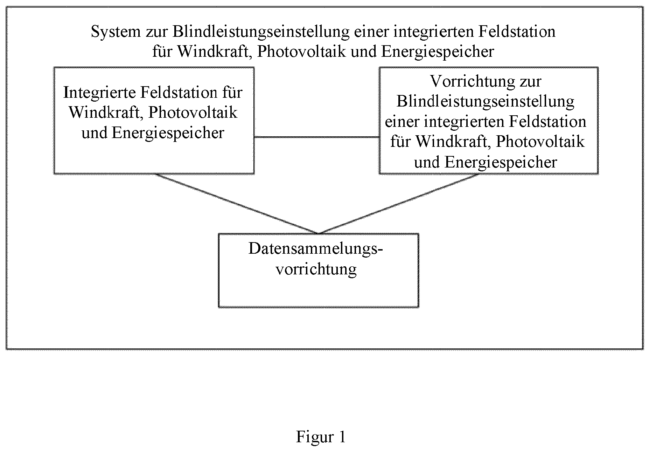

Fig. 1 ist ein schematisches Diagramm einer Struktur eines Systems zur Blindleistungseinstellung einer integrierten Feldstation für eine Windkraftanlage, eine Photovoltaik und eine Energiespeichereinheit gemäß einem Ausführungsbeispiel der vorliegenden Anwendung, das hauptsächlich eine integrierte Feldstation für eine Windkraftanlage, eine Photovoltaik und eine Energiespeichereinheit, eine Datensammelungsvorrichtung und eine Blindleistungseinstellvorrichtung der integrierten Feldstation für die Windkraftanlage, die Photovoltaik und die Energiespeichereinheit umfasst. Insbesondere kann die Leistungsinformation der integrierten Feldstation für die Windkraftanlage, die Photovoltaik und die Energiespeichereinheit durch die Datensammelungsvorrichtung gesammelt werden, und die gesammelten Daten können an die Blindleistungseinstellvorrichtung der integrierten Feldstation für die Windkraftanlage, die Photovoltaik und die Energiespeichereinheit gesendet werden. Die Blindleistungseinstellvorrichtung der integrierten Feldstation für die Windkraftanlage, die Photovoltaik und die Energiespeichereinheit bestimmt die Ziel-Blindleistungseinstelllösung für die integrierte Feldstation für eine Windkraftanlage, eine Photovoltaik und eine Energiespeichereinheit gemäß den erhaltenen Daten und den voreingestellten relevanten Informationen und führt eine entsprechende Blindleistungseinstellung an der integrierten Feldstation für die Windkraftanlage, die Photovoltaik und die Energiespeichereinheit gemäß der Ziel-Blindleistungseinstelllösung durch.

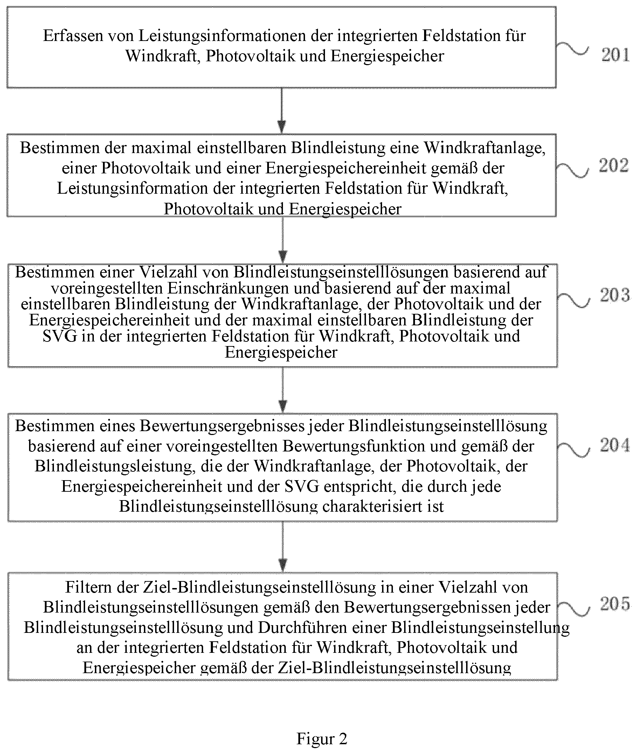

Gemäß den Ausführungsbeispielen der vorliegenden Anwendung wird ein Verfahren zur Blindleistungseinstellung einer integrierten Feldstation für eine Windkraftanlage, eine Photovoltaik und eine Energiespeichereinheit bereitgestellt, um eine Blindleistungsoptimierungseinstellung für eine großflächige integrierte Feldstation für eine Windkraftanlage, eine Photovoltaik und eine Energiespeichereinheit durchzuführen. Der Ausführungskörper des Ausführungsbeispiels der vorliegenden Anwendung ist eine elektronische Ausrüstung, wie ein Server, ein Desktop-Computer, ein Laptop, ein Tablet und andere elektronische Geräte, die verwendet werden können, um eine Blindleistungseinstellsteuerung an der integrierten Feldstation für die Windkraftanlage, die Photovoltaik und die Energiespeichereinheit durchzuführen. Fig. 2 ist ein schematisches Flussdiagramm eines Verfahrens zur Blindleistungseinstellung einer integrierten Feldstation für eine Windkraftanlage, eine Photovoltaik und eine Energiespeichereinheit gemäß einem Ausführungsbeispiel der vorliegenden Anwendung, umfassend die folgenden Schritte:

Schritt 201: Erfassen von Leistungsinformationen der integrierten Feldstation für die Windkraftanlage, die Photovoltaik und die Energiespeichereinheit.

Wobei die Leistungsinformation der integrierten Feldstation für die Windkraftanlage, die Photovoltaik und die Energiespeichereinheit Leistungsvorhersagedaten der Windkraftanlage, Leistungsvorhersagedaten der Photovoltaik und Leistungsdaten der Energiespeichereinheit umfasst.

Es sei darauf hingewiesen, dass die Leistungsvorhersagedaten der Windkraftanlage und die Leistungsvorhersagedaten der Photovoltaik die Wirkleistungsleistungsvorhersagewerte der Windkraftanlage und der Photovoltaik für einen bestimmten Zeitraum in der Zukunft umfassen können, so dass die Wirkleistungsleistungsfähigkeit der Windkraftanlage und der Photovoltaik für einen bestimmten Zeitraum in der Zukunft charakterisiert werden kann.

Schritt 202: Bestimmen der maximal einstellbaren Blindleistung der Windkraftanlage, der Photovoltaik und der Energiespeichereinheit gemäß der Leistungsinformation der integrierten Feldstation für die Windkraftanlage, die Photovoltaik und die Energiespeichereinheit.

Es sei darauf hingewiesen, dass je größer die Wirkleistungsleistung der Windkraftanlage, der Photovoltaik und der Energiespeichereinheit ist, desto weniger Blindleistung kann ausgegeben werden.

Insbesondere kann die maximal einstellbare Blindleistung der Windkraftanlage, der Photovoltaik und der Energiespeichereinheit gemäß dem Wirkleistungsleistungsgrad der Windkraftanlage, der Photovoltaik und der Energiespeichereinheit abgeleitet werden, die durch die Leistungsinformation der integrierten Feldstation für die Windkraftanlage, die Photovoltaik und die Energiespeichereinheit charakterisiert sind. Schritt 203: Bestimmen mehrerer Blindleistungseinstelllösungen basierend auf voreingestellten Einschränkungen und gemäß der maximal einstellbaren Blindleistung der Windkraftanlage, der Photovoltaik und der Energiespeichereinheit und gemäß der maximal einstellbaren Blindleistung des SVG in der integrierten Feldstation für die Windkraftanlage, die Photovoltaik und die Energiespeichereinheit.

Wobei die Blindleistungseinstelllösungen eine mit der Windkraftanlage, der Photovoltaik, der Energiespeichereinheit und der SVG entsprechende Blindleistungsleistung umfassen, so dass die maximal einstellbare Blindleistung der SVG gemäß den umfassenden Bewertungsergebnissen verschiedener Faktoren wie der installierten Kapazität der Feldstation, dem Verhältnis von Windkraftanlage, Photovoltaik und Energiespeichereinheit und dem Blindleistungseinstellungsbedarf bestimmt werden kann.

Es sei darauf hingewiesen, dass es bei der Auswahl von Einschränkungen in Gleichheitsbeschränkungen und Ungleichheitsbeschränkungen unterteilt werden kann. Die Gleichheitsbeschränkung ist die voreingestellte Leistungsflussgleichung, die die integrierte Feldstation für eine Windkraftanlage, eine Photovoltaik und eine Energiespeichereinheit erfüllt:

$$\begin{cases} P_m - U_m \sum_{n=1}^{N} U_n \left( G_{mn}\cos\delta_{mn} + B_{mn}\sin\delta_{mn} \right) = 0 \\ Q_m - U_m \sum_{n=1}^{N} U_n \left( G_{mn}\sin\delta_{mn} + B_{mn}\cos\delta_{mn} \right) = 0 \end{cases}$$

Dabei $P_m$ die Wirkleistung darstellt, die von dem Knoten m in der integrierten Feldstation für die Windkraftanlage, die Photovoltaik und die Energiespeichereinheit injiziert wird, $Q_m$ die Blindleistung darstellt, die von dem Knoten m injiziert wird, N die Gesamtmenge der Knoten darstellt, die in der integrierten Feldstation für die Windkraftanlage, die Photovoltaik und die Energiespeichereinheit enthalten sind, und ist auch die Gesamtmenge der Zweige der integrierten Feldstation für die Windkraftanlage, die Photovoltaik und die Energiespeichereinheit, $U_m$ die Spannungsamplitude des Knotens m darstellt, $U_n$ die Spannungsamplitude des Knotens n in der integrierten Feldstation für die Windkraftanlage, die Photovoltaik und die Energiespeichereinheit darstellt, $G_{mn}$ die Leitfähigkeit zwischen dem Knoten m und dem Knoten n darstellt, $B_{mn}$ die Akzeptanz zwischen dem Knoten m und dem Knoten n darstellt und $\delta_{mn}$ die Phasenwinkeldifferenz zwischen dem Knoten m und dem Knoten n darstellt.

Ungleichheitsbeschränkungen umfassen obere und untere Grenzbeschränkungen für die Leistung jeder Windkraftanlage, jeder Photovoltaik und jeder Energiespeichereinheit, obere und untere Grenzbeschränkungen für die Knotenspannung und obere und untere Grenzbeschränkungen für die Blindleistung der Blindleistungskompensationsvorrichtung SVG:

$$\begin{cases} P_{\text{wind\_min}} \leq P_{\text{wind}} \leq P_{\text{wind\_max}} \\ Q_{\text{wind\_min}} \leq Q_{\text{wind}} \leq Q_{\text{wind\_max}} \\ P_{\text{PV\_min}} \leq P_{\text{PV}} \leq P_{\text{PV\_max}} \\ Q_{\text{PV\_min}} \leq Q_{\text{PV}} \leq Q_{\text{PV\_max}} \\ P_{\text{battery\_min}} \leq P_{\text{battery}} \leq P_{\text{battery\_max}} \\ Q_{\text{battery\_min}} \leq Q_{\text{battery}} \leq Q_{\text{battery\_max}} \\ Q_{\text{SVG\_min}} \leq Q_{\text{SVG}} \leq Q_{\text{SVG\_max}} \end{cases}$$

Dabei $P_{\text{wind\_min}}$ die minimale Wirkleistungsleistung der Windkraftanlage darstellt, $P_{\text{wind\_max}}$ die maximale Wirkleistungsleistung der Windkraftanlage darstellt, $Q_{\text{wind\_min}}$ die minimale Blindleistungsleistung der Windkraftanlage darstellt, $Q_{\text{wind\_max}}$ die maximale Blindleistungsleistung der Windkraftanlage darstellt, $P_{\text{PV\_min}}$ die minimale Wirkleistungsleistung der Photovoltaik darstellt, $P_{\text{PV\_max}}$ die maximale Wirkleistungsleistung der Photovoltaik darstellt, $Q_{\text{PV\_min}}$ die minimale Blindleistungsleistung der Photovoltaik darstellt, $Q_{\text{PV\_max}}$ die maximale Blindleistungsleistung der Photovoltaik darstellt, $P_{\text{battery\_min}}$ die minimale Wirkleistungsleistung der Energiespeichereinheit darstellt, $P_{\text{battery\_max}}$ die maximale Wirkleistungsleistung der Energiespeichereinheit darstellt, $Q_{\text{battery\_min}}$ die minimale Blindleistungsleistung der Energiespeichereinheit darstellt, $Q_{\text{battery\_max}}$ die maximale Blindleistungsleistung der Energiespeichereinheit darstellt, $Q_{\text{SVG\_min}}$ die minimale Blindleistungsleistung der SVG darstellt und $Q_{\text{SVG\_max}}$ die maximale Blindleistungsleistung der SVG darstellt. Der Maximalwert der Blindleistungsleistung der Windkraftanlage, der Photovoltaik, der Energiespeichereinheit und der SVG ist die oben erwähnte maximal einstellbare Blindleistung, die basierend auf dem obigen Ausführungsbeispiel bestimmt werden kann. Der Maximalwert der Wirkleistungsleistung kann basierend auf dem Maximalwert der Blindleistungsleistung umgekehrt abgeleitet werden. Der Mindestwert der Blindleistungsleistung und der Mindestwert der Wirkleistungsleistung können gemäß den grundlegenden Betriebsanforderungen der integrierten Feldstation für die Windkraftanlage, die Photovoltaik und die Energiespeichereinheit bestimmt werden.

Schritt 204: Bestimmen eines Bewertungsergebnisses jeder Blindleistungseinstelllösung basierend auf einer voreingestellten Bewertungsfunktion und gemäß der mit der Windkraftanlage, der Photovoltaik, der Energiespeichereinheit und der SVG entsprechenden und durch jede Blindleistungsregelungslösung charakterisierten Blindleistungsleistung, wobei das Bewertungsergebnis verwendet wird, um die Blindleistungseinstellkosten zu charakterisieren, die der Blindleistungseinstelllösung entsprechen.

Insbesondere kann nach der Formulierung mehrerer Blindleistungseinstelllösungen basierend auf den obigen Ausführungsbeispielen die Wirkleistungsleistung entsprechend der Windkraftanlage, der Photovoltaik und der Energiespeichereinheit basierend auf der Blindleistungsleistung der Windkraftanlage, der Blindleistungsleistung der Photovoltaik, der Blindleistungsleistung der Energiespeichereinheit und der Blindleistungsleistung der SVG bestimmt werden, die von jeder Blindleistungseinstelllösung geleitet wird. Entsprechend der Wirkleistungsleistung und der Blindleistungsleistung jeder Ausrüstung werden die Blindleistungseinstellkosten entsprechend jeder Blindleistungseinstelllösung analysiert, um die Bewertungsergebnisse jeder Blindleistungseinstelllösung zu erhalten.

Schritt 205: Auswählen einer Ziel-Blindleistungseinstelllösung unter mehreren Blindleistungseinstelllösungen gemäß den Bewertungsergebnissen jeder Blindleistungseinstelllösung und Durchführen einer Blindleistungseinstellung an der integrierten Feldstation für die Windkraftanlage, die Photovoltaik und die Energiespeichereinheit gemäß der Ziel-Blindleistungseinstelllösung.

Insbesondere kann gemäß den Blindleistungseinstellkosten, die durch die Bewertungsergebnisse jeder Blindleistungseinstelllösung charakterisiert sind, die Blindleistungseinstelllösung mit den niedrigsten Blindleistungseinstellkosten als die Ziel-Blindleistungseinstelllösung bestimmt werden, um die Blindleistungseinstellkosten der integrierten Feldstation für die Windkraftanlage, die Photovoltaik und die Energiespeichereinheit zu reduzieren.

Basierend auf dem obigen Ausführungsbeispiel ist vorgesehen, dass die Leistungsvorhersagedaten der Windkraftanlage einen Wirkleistungsleistungsvorhersagewert der Windkraftanlage umfassen, dass die Leistungsvorhersagedaten der Photovoltaik einen Wirkleistungsleistungsvorhersagewert der Photovoltaik umfassen, dass die Leistungsdaten der Energiespeichereinheit einen Wirkleistungsleistungswert der Energiespeichereinheit umfassen. Als implementierbare Weise ist in einem Ausführungsbeispiel vorgesehen, dass das Bestimmen der maximal einstellbaren Blindleistung der Windkraftanlage, der Photovoltaik und der Energiespeichereinheit gemäß der Leistungsinformation der integrierten Feldstation für die Windkraftanlage, die Photovoltaik und die Energiespeichereinheit, umfassend:

Schritt 2021: Bestimmen einer maximal einstellbaren Blindleistung der Windkraftanlage gemäß dem Wirkleistungsleistungsvorhersagewert der Windkraftanlage und der Nennkapazität der Windkraftanlage;

Schritt 2022: Bestimmen einer maximal einstellbaren Blindleistung der Photovoltaik gemäß dem Wirkleistungsleistungsvorhersagewert der Photovoltaik und einer Nennkapazität der Photovoltaik;

Schritt 2023: Bestimmen einer maximal einstellbaren Blindleistung der Energiespeichereinheit gemäß dem Wirkleistungsleistungsvorhersagewert der Energiespeichereinheit und der Nennkapazität der Energiespeichereinheit. Insbesondere kann die maximal einstellbare Blindleistung $Q_{wind\_max}$ der Windkraftanlage gemäß der folgenden Formel bestimmt werden:

$$Q_{wind\_max} = a \times \sqrt{S_{wind\_N}^2 - \left(b \times P_{wind\_predict}\right)^2}$$

Dabei $S_{wind\_N}$ die Nennkapazität der Windkraftanlage darstellt und $P_{wind\_predict}$ den Wirkleistungsleistungsvorhersagewert der Windkraftanlage darstellt. Da es einen gewissen Fehler bei der Vorhersage der Leistung von Windkraftanlage und Photovoltaik geben kann, kann der tatsächliche Leistungswert gemäß dem Vorhersagewert gemäß dem Fehler von 20% geschätzt werden, d.h. der Fehlerkompensationskoeffizient b = 1 + 20% = 1,2. Da die Kapazität des Wandlers auf der Netzseite der doppelt gespeisten Onshore-Windkraftanlage im Allgemeinen 30% der Kapazität der Windkraftanlage beträgt, beträgt die einstellbare Blindleistung der Windkraftanlage nur 30% des berechneten Blindleistungswerts, d.h. der Gewichtskoeffizient a = 30%.

Ferner kann die maximal einstellbare Blindleistung $Q_{PV\_max}$ der Photovoltaik gemäß der folgenden Formel bestimmt werden:

$$Q_{PV\_max} = \sqrt{S_{PV\_N}^2 - \left(1.2 \times P_{PV\_predict}\right)^2}$$

Dabei $S_{PV\_N}$ die Nennkapazität der Photovoltaik darstellt und $P_{PV\_predict}$ den Wirkleistungsleistungsvorhersagewert der Photovoltaik darstellt.

Ferner kann die maximal einstellbare Blindleistung $Q_{battery\_max}$ der Energiespeichereinheit gemäß der folgenden Formel bestimmt werden:

$$Q_{battery\_max} = \sqrt{S_{battery\_N}^2 - P_{battery\_predict}^2}$$

Dabei $S_{battery\_N}$ die Nennkapazität der Energiespeichereinheit darstellt und $P_{battery\_predict}$ den Wirkleistungsleistungsvorhersagewert der Energiespeichereinheit darstellt. Die Wirkleistungsleistung der Energiespeichereinheit kann im Allgemeinen genau bestimmt werden und wird hauptsächlich verwendet, um Funktionen wie Glättung, Spitze, Peaking und primäre Frequenzmodulation der Vorhersage der Leistung von Windkraftanlage und Photovoltaik zu erreichen.

Basierend auf dem obigen Ausführungsbeispiel ist das vereinfachte Verfahren zum Äquivalent einer neuen Energiefeldstation zu einem PQ-Knoten nicht mehr anwendbar, da die Erhöhung der Einzelmaschinenkapazität der Windkraftanlage und der Photovoltaik zu einer Erhöhung des Blindleistungsverlusts des Aufwärtstransformators und des Kabels führt. Darüber hinaus nimmt mit der schnellen Erhöhung der installierten Kapazität von Windparkstationen und Photovoltaikkraftwerken auch die Länge der Kollektorleitungen innerhalb der neuen Energiefeldstation zu, so dass der entsprechende Blindleistungsverlust weiter zunimmt. Daher ist das Blindleistungsoptimierungsverfahren, das die interne Struktur des neuen elektrischen Energiefeldes und der Kollektorleitung berücksichtigt, zu einem wichtigen Thema in der aktuellen Forschung geworden.

Als implementierbare Weise ist in einem Ausführungsbeispiel basierend auf dem obigen Ausführungsbeispiel vorgesehen, dass das Bestimmen eines Bewertungsergebnisses jeder Blindleistungseinstelllösung basierend auf einer voreingestellten Bewertungsfunktion und gemäß der mit der Windkraftanlage, der Photovoltaik, der Energiespeichereinheit und der SVG entsprechenden und durch jede Blindleistungsregelungslösung charakterisierten Blindleistungsleistung, umfassend:

Schritt 2041: Bestimmen des äquivalenten wirtschaftlichen Nutzens der Blindleistungseinstelllösung gemäß der Blindleistungsleistung und der Wirkleistungsleistung, die der Windkraftanlage, der Photovoltaik und der Energiespeichereinheit entsprechen, die durch die Blindleistungseinstelllösung für jede der Blindleistungseinstelllösungen charakterisiert sind;

Schritt 2042: Bestimmen des Bewertungsergebnisses der Blindleistungseinstelllösung basierend auf der voreingestellten Bewertungsfunktion und gemäß dem äquivalenten wirtschaftlichen Nutzen der Blindleistungseinstelllösung, der Blindleistungsleistung der SVG und dem Netzwerkverlust, der der integrierten Feldstation für die Windkraftanlage, die Photovoltaik und die Energiespeichereinheit entspricht.

Es sei darauf hingewiesen, dass sich der äquivalente wirtschaftliche Nutzen der Blindleistungseinstelllösung hauptsächlich auf den äquivalenten wirtschaftlichen Nutzen beziehen, die durch den Ersatz eines Teils der SVG-Kapazität durch Windkraftanlagen, Photovoltaik und Energiespeichereinheiten erzeugt werden. Insbesondere kann in einem Ausführungsbeispiel der äquivalente wirtschaftliche Nutzen der Blindleistungseinstelllösung gemäß der folgenden Formel berechnet werden:

$$P_{\text{replace}} = -k_1 k_2 \left( Q_{\text{wind}} + Q_{\text{PV}} + Q_{\text{battery}} \right)$$

Dabei $P_{\text{replace}}$ den äquivalenten wirtschaftlichen Nutzen der Blindleistungseinstelllösung darstellt, $Q_{\text{wind}}$ die Blindleistungsleistung der Windkraftanlage darstellt, $Q_{\text{PV}}$ die Blindleistungsleistung der Photovoltaik darstellt, $Q_{\text{battery}}$ die Blindleistungsleistung der Energiespeichereinheit darstellt, $k_1$ den Umwandlungskoeffizienten der Blindleistungsleistung zu den SVG-Kosten darstellt und $k_2$ den Umwandlungskoeffizienten der SVG-Kosten zu der Wirkleistungsleistung darstellt;

Ferner ist in einem Ausführungsbeispiel vorgesehen, dass das Bestimmen eines Bewertungsergebnisses der Blindleistungseinstelllösung basierend auf der folgenden Bewertungsfunktion und gemäß dem äquivalenten wirtschaftlichen Nutzen der Blindleistungseinstelllösung, der Blindleistungsleistung der SVG und dem Netzwerkverlust, der der integrierten Feldstation für die Windkraftanlage, die Photovoltaik und die Energiespeichereinheit entspricht:

$$f\left( Q_{\text{wind}}, Q_{\text{PV}}, Q_{\text{battery}}, Q_{\text{SVG}} \right) = P_{\text{loss\_group}} + \lambda_1 P_{\text{replace}} + \lambda_2 k_1 k_2 Q_{\text{SVG}}$$

$$\begin{cases} \lambda_1 = \dfrac{P_{\text{wind}} + P_{\text{PV}} + P_{\text{battery}}}{S_{\text{wind\_N}} + S_{\text{PV\_N}} + S_{\text{battery\_N}}} \\ \lambda_2 = \dfrac{Q_{\text{SVG}}}{Q_{\text{SVG\_max}}} \end{cases}$$

Dabei $f\ (Q_{\text{wind}}, Q_{\text{PV}}, Q_{\text{battery}}, Q_{\text{SVG}})$ das Bewertungsergebnis der Blindleistungseinstelllösung darstellt, $P_{\text{loss\_group}}$ den Netzwerkverlust darstellt, der der integrierten Feldstation für die Windkraftanlage, die Photovoltaik und die Energiespeichereinheit entspricht, $Q_{\text{SVG}}$ die Blindleistungsleistung der SVG darstellt, $\lambda_1$ den Verdrängungskoeffizienten der Blindleistungskapazität der SVG darstellt, $\lambda_2$ den Gewichtskoeffizienten der Blindleistungsleistung der SVG darstellt, $P_{\text{wind}}$ die Wirkleistungsleistung der Windkraftanlage darstellt, $P_{\text{PV}}$ die Wirkleistungsleistung der Photovoltaik darstellt, $P_{\text{battery}}$ die Wirkleistungsleistung der Energiespeichereinheit darstellt, $S_{\text{wind\_N}}$ die Nennkapazität der Windkraftanlage darstellt, $S_{\text{PV\_N}}$ die Nennkapazität der Photovoltaik darstellt, $S_{\text{battery\_N}}$ die Nennkapazität der Energiespeichereinheit darstellt und $Q_{\text{SVG\_max}}$ die maximal einstellbare Blindleistung der SVG darstellt.

Es sei darauf hingewiesen, dass die meisten neuen Energiefeldstationen derzeit mit SVG ausgestattet sind, was den Vorteil einer schnellen bidirektionalen kontinuierlichen Blindleistungseinstellfähigkeit hat und den Nachteil hoher Konstruktionskosten hat. Da der Blindleistungseinstellmechanismus der Windkraftanlage, der Photovoltaik und der Energiespeichereinheit der SVG ähnlich ist, kann die Kapazität der Konfiguration des SVG basierend auf den Einschränkungen, die durch das obige Ausführungsbeispiel bereitgestellt werden, reduziert werden, wodurch die Konstruktionskosten reduziert werden. Da jedoch die Windkraftanlage, die Photovoltaik und die Energiespeichereinheit hauptsächlich zur Wirkleistungserzeugung verwendet werden, wird die Bereitstellung einer Blindleistungsunterstützung im Falle einer großen oder sogar vollen Wirkleistungsleistung für Windkraftanlage, Photovoltaik einen Teil der Wirkleistungsleistung entsprechend verlieren. Daher ist es notwendig, die Blindleistungsleistungskosten der drei umfassend zu berücksichtigen und eine koordinierte Optimierungssteuerung durchzuführen. Daher ist es notwendig, die Blindleistungseinstellkosten in Kombination mit den Leistungsvorhersagedaten der Windkraftanlage und der Photovoltaik zu schätzen. Insbesondere kann im Falle einer großen oder sogar vollen Wirkleistungsleistung für Windkraftanlage, Photovoltaik die einstellbare Blindleistung der Windkraftanlage und der Photovoltaik klein sein. Daher liegt der Schwerpunkt in diesem Fall auf der Substitution von Energiespeichereinheiten für SVG. Da die Struktur des Wandlers auf der Netzseite der Energiespeichereinheit die gleiche ist wie die von SVG, kann angenähert werden, dass die Blindleistungseinstellfähigkeit der beiden gleich ist.

Es sei darauf hingewiesen, dass die Definition von $\lambda_1$ und $\lambda_2$ hauptsächlich die Aufteilung des Blindleistungseinstelldrucks von SVG durch Erhöhen der Blindleistungseinstellfähigkeit von Windkraftanlagen, Photovoltaik und Energiespeichereinheiten berücksichtigt, wodurch die Spannungseinstellkosten der Feldstation reduziert werden. Aus der obigen Formel ist ersichtlich, dass je größer die tatsächliche Blindleistung der Windkraftanlage, der Photovoltaik und der Energiespeichereinheit ist, d.h. je größer die Blindleistungsleistung der Windkraftanlage, der Photovoltaik und der Energiespeichereinheit ist, desto größer sind $\lambda_1$ und $\lambda_2$. Da f ($Q_{wind}$, $Q_{PV}$, $Q_{battery}$, $Q_{SVG}$) ein Minimalwert ist, besteht die Rolle von $\lambda_1$ und $\lambda_2$ während des Optimierungsprozesses darin, die tatsächliche Blindleistung der Windkraftanlage, der Photovoltaik und der Energiespeichereinheit zu begrenzen, d.h. sicherzustellen, dass die Blindleistung im Falle einer großen Wirkleistungsleistung der Windkraftanlage und der Photovoltaik reduziert wird.

Ferner kann in einem Ausführungsbeispiel der Netzwerkverlust, der der integrierten Feldstation für die Windkraftanlage, die Photovoltaik und die Energiespeichereinheit entspricht, gemäß der folgenden Formel bestimmt werden:

$$P_{\text{loss\_group}} = \sum_{i=1}^{N_T} G_{Ti} U_i^2 + \sum_{j=1}^{N_L} R_j \frac{P_j^2 + Q_j^2}{U_j^2}$$

Dabei $N_T$ die Gesamtmenge an Transformatoren der integrierten Feldstation für die Windkraftanlage, die Photovoltaik und die Energiespeichereinheit darstellt, $N_L$ die Gesamtmenge an Kollektorleitungen der integrierten Feldstation für die Windkraftanlage, die Photovoltaik und die Energiespeichereinheit darstellt, $G_{Ti}$ die Leitfähigkeit des i-ten Transformators darstellt, $U_i$ die Spannung des Knotens darstellt, in dem sich der i-te Transformator befindet, $R_j$ den Widerstand der j-Leitung darstellt, $U_j$ die Spannung des Zielknotens auf der j-Leitung darstellt, $P_j$ die Wirkleistung darstellt, die von dem Zielknoten injiziert wird, und $Q_j$ die Blindleistung darstellt, die von dem Zielknoten injiziert wird.

Es sei darauf hingewiesen, dass der Netzwerkverlust zunimmt, wenn die Kapazität und Anzahl von Windkraftanlagen, Photovoltaik und Energiespeichereinheiten zunimmt. Auf der einen Seite erzeugt jede Windkraftanlage, jede Photovoltaikgruppenfolge und der Aufwärtstransformator am Ausgang jeder Energiespeichereinheit einen Netzwerkverlust, so dass die Zunahme der Anzahl der Transformatoren zu einer Zunahme des Netzwerkverlusts führt. Auf der anderen Seite führt die Zunahme der Anzahl von Windkraftanlagen und Photovoltaikgruppenfolgen zu einer Zunahme der Länge der Kollektorleitung in der Feldstation, und die Verwendung von Kabeln erhöht den Netzwerkverlust der Kollektorleitung stark. Verglichen mit der Blindleistungsoptimierung der herkömmlichen Windkraftanlagen muss daher das Einstellziel der Blindleistungsoptimierung der integrierten Feldstation für die Windkraftanlage, die Photovoltaik und die Energiespeichereinheit den Netzwerkverlust umfassen, der durch den Transformator und die Kollektorleitung erzeugt wird. Basierend auf dem obigen Ausführungsbeispiel kann die Ziel-Blindleistungseinstelllösung schnell bestimmt werden. Als implementierbare Weise ist in einem Ausführungsbeispiel vorgesehen, dass das Bestimmen mehrerer Blindleistungseinstelllösungen basierend auf voreingestellten Einschränkungen und gemäß der maximal einstellbaren Blindleistung der Windkraftanlage, der Photovoltaik und der Energiespeichereinheit und gemäß der maximal einstellbaren Blindleistung des SVG in der integrierten Feldstation für die Windkraftanlage, die Photovoltaik und die Energiespeichereinheit, die folgende Schritte umfasst:

Schritt 2031: Bestimmen mehrerer Blindleistungseinstelllösungen basierend auf voreingestellten Einschränkungen und gemäß der maximal einstellbaren Blindleistung der Windkraftanlage, der Photovoltaik und der Energiespeichereinheit und gemäß der maximal einstellbaren Blindleistung des SVG in der integrierten Feldstation für die Windkraftanlage, die Photovoltaik und die Energiespeichereinheit;

Schritt 2032: Bestimmen eines Netzwerkverlusts, der jeder anfänglichen Blindleistungseinstelllösung in dem Satz von den anfänglichen Blindleistungseinstelllösungen entspricht;

Schritt 2033: Auswählen mehrerer Blindleistungseinstelllösungen in einem Satz von den anfänglichen Blindleistungseinstelllösungen gemäß dem Netzwerkverlust, der jeder der anfänglichen Blindleistungseinstelllösungen entspricht.

Es sei darauf hingewiesen, dass der Netzwerkverlust, der jeder anfänglichen Blindleistungseinstelllösung in dem anfänglichen Blindleistungseinstelllösungssatz entspricht, basierend auf der obigen Netzwerkverlustberechnungsformel berechnet werden kann.

Insbesondere kann ein erschöpfendes Verfahren oder dergleichen verwendet werden, z. B. Bestimmen eines Satzes von den anfänglichen Blindleistungseinstelllösungen basierend auf voreingestellten Einschränkungen und gemäß der maximal einstellbaren Blindleistung der Windkraftanlage, der Photovoltaik und der Energiespeichereinheit und der maximal einstellbaren Blindleistung des SVG in der integrierten Feldstation für die Windkraftanlage, die Photovoltaik und die Energiespeichereinheit. Dann wird gemäß dem Netzwerkverlust, der jeder anfänglichen Blindleistungseinstelllösung in dem anfänglichen Blindleistungseinstelllösungssatz entspricht, der anfängliche Blindleistungseinstelllösungssatz grob ausgewählt, um mehrere Blindleistungseinstelllösungen auszuwählen, die schließlich in die Berechnung der Bewertungsfunktion eingegeben werden können.

Beispielhaft kann eine Blindleistungseinstelllösung mit einem Netzwerkverlust kleiner als die voreingestellte Netzwerkverlustschwelle in dem anfänglichen Blindleistungseinstelllösungssatz gemäß der Größe des Netzwerkverlusts, der jeder anfänglichen Blindleistungseinstelllösung in dem anfänglichen Blindleistungseinstelllösungssatz entspricht, ausgewählt werden. Oder entsprechend der Größe des Netzwerkverlusts, der jeder anfänglichen Blindleistungseinstelllösung entspricht, wird die anfängliche Blindleistungseinstelllösung in dem anfänglichen Blindleistungseinstelllösungssatz in aufsteigender Reihenfolge sortiert, um die Blindleistungseinstelllösung auszuwählen, deren voreingestelltes Verhältnis in dem anfänglichen Blindleistungseinstelllösungssatz sortiert ist. In dem Fall, in dem das Verfahren zur Blindleistungseinstellung einer integrierten Feldstation für eine Windkraftanlage, eine Photovoltaik und eine Energiespeichereinheit gemäß dem Ausführungsbeispiel der vorliegenden Anmeldung basierend auf dem immungenetischen Algorithmus gelöst wird, kann die Blindleistungseinstelllösung in dem anfänglichen Blindleistungseinstelllösungssatz gemäß der anfänglichen Populationsgröße N des immungenetischen Algorithmus ausgewählt werden, wobei die anfängliche Populationsgröße N im Allgemeinen gemäß der Größe des tatsächlichen Beispiels bestimmt wird, so dass eine Blindleistungsregulierungslösung, die die anfängliche Populationsgröße N des immungenetischen Algorithmus erfüllt, ausgewählt und sortiert werden kann.

Das Verfahren zur Blindleistungseinstellung einer integrierten Feldstation für eine Windkraftanlage, eine Photovoltaik und eine Energiespeichereinheit gemäß dem Ausführungsbeispiel der vorliegenden Anmeldung kann speziell basierend auf dem immungenetischen Algorithmus gelöst werden, das heißt, die Berechnung der Bewertungsfunktion wird basierend auf dem immungenetischen Algorithmus realisiert, und die Ziel-Blindleistungseinstelllösung wird bestimmt, um die folgende adaptive Konfiguration des immungenetischen Algorithmus durchzuführen:

(1) Kodierung: Da die an der Blindleistungseinstellung in der Feldstation beteiligten Ausrüstungen die Blindleistungsabgabe kontinuierlich einstellen können, wird der Antikörper entsprechend reell codiert. Die spezifischen Formen des Antikörpergens sind:

$$A = [\text{wind}_{1 \cdots N_1}, \text{PV}_{1 \cdots N_2}, \text{battery}_{1 \cdots N_3}, \text{SVG}_{1 \cdots N_4}]$$

Dabei N1, N2, N3 und N4 jeweils die Anzahl der Windkraftanlagen, Photovoltaik, Energiespeichereinheiten und SVG darstellen.

(2) Auswahl von Antikörpern: Es gibt eine große Anzahl von Energieerzeugungseinheiten für eine Windkraftanlage, eine Photovoltaik und eine Energiespeichereinheit in großflächigen integrierten Feldstationen für eine Windkraftanlage, eine Photovoltaik und eine Energiespeichereinheit. Entsprechend der Topologie der Kollektorleitung in der Feldstation werden Energieerzeugungseinheiten mit ähnlichen elektrischen Abständen nach einem bestimmten Clustering-Prinzip integriert, wodurch die Komplexität des Antikörpers verringert und die Optimierungsgeschwindigkeit verbessert wird. Für die Windkraftanlage sind alle Einheiten auf der gleichen Kollektorleitung äquivalent zu einer Einheit mit der gleichen Kapazität. Für die Photovoltaik ist es notwendig, die Photovoltaikanordnung unter Berücksichtigung der tatsächlichen Verbindungsmethode der Photovoltaikgruppenfolge zu teilen. Für die Energiespeichereinheit ist eine Energiespeicherbox im Allgemeinen eine Energieerzeugungseinheit, und die Energieerzeugungseinheit, die an der Blindleistung beteiligt ist, wird direkt als Antikörper verwendet.

(3) Fitnessfunktion: Die obige Bewertungsfunktion wird als Fitnessfunktion verwendet.

(4) Adaptive Verbesserung des Kreuzoperators, des Mutationsoperators und der Immunauswahl: Da das Prinzip der Blindleistungseinstellung von Windkraftanlagen, Photovoltaik, Energiespeichereinheiten und SVG gleich ist, ist es nicht notwendig, die Unterschiede in verschiedenen Gensequenzsegmenten bei der Mutation individueller Kreuzungen zu berücksichtigen.

Der Anwendungsprozess des immungenetischen Algorithmus gemäß den Ausführungsbeispielen der vorliegenden Anmeldung ist wie folgt:

(1) Eingabe der Anfangsparameterwerte für die Blindleistungsoptimierung: Es umfasst hauptsächlich die Populationsgröße (d.h. die Summe der Anzahl der Windkraftanlagen, der Anzahl der Photovoltaik und Energiespeichereinheiten und der Anzahl der SVG-Ausrüstungen), die Anzahl der geklonten Zellen, das Klonierungsmultiplikator, die Anzahl der Immunsupplementierungen, die anfängliche Kreuzungsrate, die anfängliche Mutationsrate, die Größe der geimpften Population, die Genauigkeitsanforderungen und die maximale Anzahl von Iterationen.

(2) Gemäß dem Zufallszahlenverfahren wird eine gleichmäßig verteilte Anfangspopulation erzeugt, und der Fitnesswert jedes Antikörpers wird gemäß der obigen Bewertungsfunktion berechnet. Die Blindleistungseinstellbefehle der Windkraftanlage, der Photovoltaik, der Energiespeichereinheit und der SVG, die das optimale Blindleistungsoptimierungsziel (Ziel-Blindleistungseinstelllösung) erhalten, werden als Immunimpfstoffe ausgewählt. Der Antikörper mit der höchsten Affinität zum Antigen wird als Gedächtniszelle gespeichert. Die Anzahl der Iterationen t=1.

(3) In Kombination mit der adaptiven Verbesserungsstrategie des Kreuzoperators, des Mutationsoperators und der Immunauswahl gemäß den obigen Ausführungsbeispielen werden die Berechnung des erwarteten Werts, die Auswahl und Amplifikation von klonierten Zellen und die Auswahl von Kreuzungen, Mutationen und Immunitäten gemäß dem herkömmlichen Verfahren durchgeführt.

(4) Es wird beurteilt, ob die maximale Anzahl von Iterationen erreicht ist, und wenn sie erfüllt ist, endet sie, andernfalls wird t = t + 1 gesetzt und zu Schritt (3) gesprungen.

Gemäß den Ausführungsbeispielen der vorliegenden Anmeldung werden ein Verfahren zur Blindleistungseinstellung einer integrierten Feldstation für eine Windkraftanlage, eine Photovoltaik und eine Energiespeichereinheit bereitgestellt, umfassend die folgenden Schritte: Erfassen von Leistungsinformationen der integrierten Feldstation für die Windkraftanlage, die Photovoltaik und die Energiespeichereinheit, wobei die Leistungsinformation die Leistungsvorhersagedaten der Windkraftanlage, die Leistungsvorhersagedaten der Photovoltaik und die Leistungsdaten der Energiespeichereinheit umfasst; Bestimmen der maximal einstellbaren Blindleistung der Windkraftanlage, der Photovoltaik und der Energiespeichereinheit gemäß der Leistungsinformation der integrierten Feldstation für die Windkraftanlage, die Photovoltaik und die Energiespeichereinheit; Bestimmen mehrerer Blindleistungseinstelllösungen basierend auf voreingestellten Einschränkungen und gemäß der maximal einstellbaren Blindleistung der Windkraftanlage, der Photovoltaik und der Energiespeichereinheit und gemäß der maximal einstellbaren Blindleistung des SVG in der integrierten Feldstation für die Windkraftanlage, die Photovoltaik und die Energiespeichereinheit, wobei die Blindleistungseinstelllösungen eine mit der Windkraftanlage, der Photovoltaik, der Energiespeichereinheit und der SVG entsprechende Blindleistungsleistung umfassen; Bestimmen eines Bewertungsergebnisses jeder Blindleistungseinstelllösung basierend auf einer voreingestellten Bewertungsfunktion und gemäß der mit der Windkraftanlage, der Photovoltaik, der Energiespeichereinheit und der SVG entsprechenden und durch jede Blindleistungsregelungslösung charakterisierten Blindleistungsleistung, wobei das Bewertungsergebnis verwendet wird, um die Blindleistungseinstellkosten zu charakterisieren, die der Blindleistungseinstelllösung entsprechen; Auswählen einer Ziel-Blindleistungseinstelllösung unter mehreren Blindleistungseinstelllösungen gemäß den Bewertungsergebnissen jeder Blindleistungseinstelllösung und Durchführen einer Blindleistungseinstellung an der integrierten Feldstation für die Windkraftanlage, die Photovoltaik und die Energiespeichereinheit gemäß der Ziel-Blindleistungseinstelllösung. Das Verfahren gemäß der obigen Lösung ist ein Blindleistungseinstellverfahren, das für dieses Anwendungsszenario der integrierten Feldstation für die Windkraftanlage, die Photovoltaik und die Energiespeichereinheit bereitgestellt wird. Durch die Koordinierung der Blindleistungsleistung von Windkraftanlagen, Photovoltaik, Energiespeichereinheiten und SVG mit dem Ziel, die Blindleistungseinstellkosten zu reduzieren, wird die Blindleistungseinstellfähigkeit der Windkraftanlage, der Photovoltaik und der Energiespeichereinheit voll ausgeschöpft, wodurch die Blindleistungseinstellkosten reduziert werden, während der Blindleistungseinstelleffekt der integrierten Feldstation für die Windkraftanlage, die Photovoltaik und die Energiespeichereinheit sichergestellt wird, die in praktischen Anwendungen eine hohe Durchführbarkeit und Wirtschaftlichkeit aufweist.

Gemäß den Ausführungsbeispielen der vorliegenden Anmeldung werden eine Vorrichtung zur Blindleistungseinstellung einer integrierten Feldstation für eine Windkraftanlage, eine Photovoltaik und eine Energiespeichereinheit bereitgestellt, um ein Verfahren zur Blindleistungseinstellung einer integrierten Feldstation für eine Windkraftanlage, eine Photovoltaik und eine Energiespeichereinheit gemäß dem obigen Ausführungsbeispiel auszuführen.

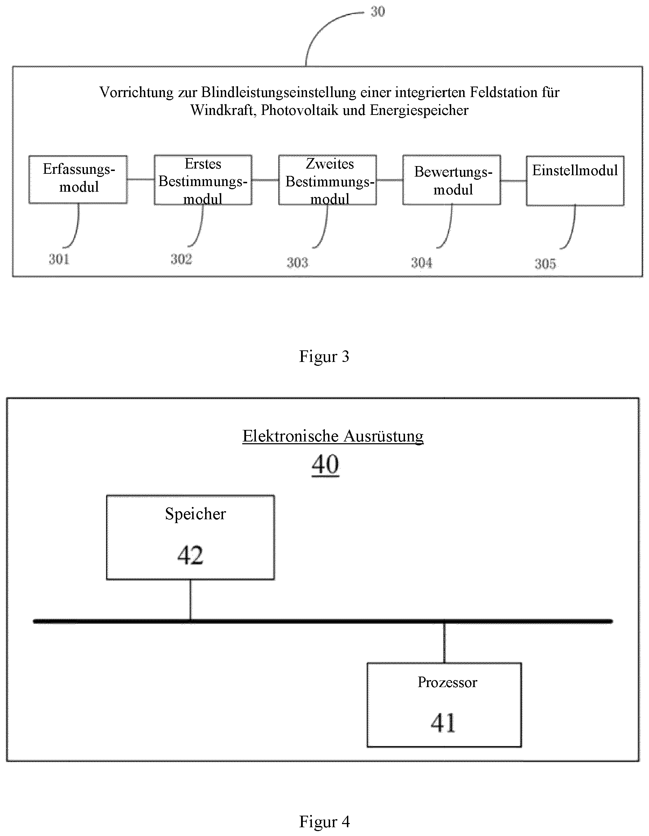

Fig. 3 ist ein schematisches Diagramm einer Struktur einer Vorrichtung zur Blindleistungseinstellung einer integrierten Feldstation für eine Windkraftanlage, eine Photovoltaik und eine Energiespeichereinheit gemäß einem Ausführungsbeispiel der vorliegenden Anwendung. Die Vorrichtung 30 zur Blindleistungseinstellung einer integrierten Feldstation für eine Windkraftanlage, eine Photovoltaik und eine Energiespeichereinheit umfasst ein Erfassungsmodul 301, ein erstes Bestimmungsmodul 302, ein zweites Bestimmungsmodul 303, ein Bewertungsmodul 304 und ein Einstellmodul 305.

Wobei ein Erfassungsmodul zum Erfassen von Leistungsinformationen der integrierten Feldstation für die Windkraftanlage, die Photovoltaik und die Energiespeichereinheit, wobei die Leistungsinformation die Leistungsvorhersagedaten der Windkraftanlage, die Leistungsvorhersagedaten der Photovoltaik und die Leistungsdaten der Energiespeichereinheit umfasst; ein erstes Bestimmungsmodul zum Bestimmen der maximal einstellbaren Blindleistung der Windkraftanlage, der Photovoltaik und der Energiespeichereinheit gemäß der Leistungsinformation der integrierten Feldstation für die Windkraftanlage, die Photovoltaik und die Energiespeichereinheit; ein zweites Bestimmungsmodul zum Bestimmen mehrerer Blindleistungseinstelllösungen basierend auf voreingestellten Einschränkungen und gemäß der maximal einstellbaren Blindleistung der Windkraftanlage, der Photovoltaik und der Energiespeichereinheit und gemäß der maximal einstellbaren Blindleistung des SVG in der integrierten Feldstation für die Windkraftanlage, die Photovoltaik und die Energiespeichereinheit, wobei die Blindleistungseinstelllösungen eine mit der Windkraftanlage, der Photovoltaik, der Energiespeichereinheit und der SVG entsprechende Blindleistungsleistung umfassen; ein Bewertungsmodul zum Bestimmen eines Bewertungsergebnisses jeder Blindleistungseinstelllösung basierend auf einer voreingestellten Bewertungsfunktion und gemäß der mit der Windkraftanlage, der Photovoltaik, der Energiespeichereinheit und der SVG entsprechenden und durch jede Blindleistungsregelungslösung charakterisierten Blindleistungsleistung, wobei das Bewertungsergebnis verwendet wird, um die Blindleistungseinstellkosten zu charakterisieren, die der Blindleistungseinstelllösung entsprechen; ein Einstellmodul zum Auswählen der Ziel-Blindleistungseinstelllösung in mehreren Blindleistungseinstelllösungen gemäß den Bewertungsergebnissen jeder Blindleistungseinstelllösung und zum Durchführen einer Blindleistungseinstellung an der integrierten Feldstation für die Windkraftanlage, die Photovoltaik und die Energiespeicher gemäß der Ziel-Blindleistungseinstelllösung.

Insbesondere ist in einem Ausführungsbeispiel vorgesehen, dass die Leistungsvorhersagedaten der Windkraftanlage einen Wirkleistungsleistungsvorhersagewert der Windkraftanlage umfassen, dass die Leistungsvorhersagedaten der Photovoltaik einen Wirkleistungsleistungsvorhersagewert der Photovoltaik umfassen, dass die Leistungsdaten der Energiespeichereinheit einen Wirkleistungsleistungswert der Energiespeichereinheit umfassen, dass das erste Bestimmungsmodul wird speziell dafür verwendet:

Bestimmen einer maximal einstellbaren Blindleistung der Windkraftanlage gemäß dem Wirkleistungsleistungsvorhersagewert der Windkraftanlage und der Nennkapazität der Windkraftanlage;

Bestimmen einer maximal einstellbaren Blindleistung der Photovoltaik gemäß dem Wirkleistungsleistungsvorhersagewert der Photovoltaik und einer Nennkapazität der Photovoltaik;

Bestimmen einer maximal einstellbaren Blindleistung der Energiespeichereinheit gemäß dem Wirkleistungsleistungsvorhersagewert der Energiespeichereinheit und der Nennkapazität der Energiespeichereinheit.

Insbesondere ist in einem Ausführungsbeispiel vorgesehen, dass das Bewertungsmodul speziell dafür verwendet wird:

Bestimmen des äquivalenten wirtschaftlichen Nutzens der Blindleistungseinstelllösung gemäß der Blindleistungsleistung und der Wirkleistungsleistung, die der Windkraftanlage, der Photovoltaik und der Energiespeichereinheit entsprechen, die durch die Blindleistungseinstelllösung für jede der Blindleistungseinstelllösungen charakterisiert sind;

Dass das Bestimmen des Bewertungsergebnisses der Blindleistungseinstelllösung basierend auf der voreingestellten Bewertungsfunktion und gemäß dem äquivalenten wirtschaftlichen Nutzen der Blindleistungseinstelllösung, der Blindleistungsleistung der SVG und dem Netzwerkverlust, der der integrierten Feldstation für die Windkraftanlage, die Photovoltaik und die Energiespeichereinheit entspricht. Insbesondere ist in einem Ausführungsbeispiel vorgesehen, dass das Bewertungsmodul speziell dafür verwendet wird:

Der äquivalente wirtschaftliche Nutzen der Blindleistungseinstelllösung wird gemäß der folgenden Formel berechnet:

$$P_{\text{replace}} = -k_1 k_2 \left( Q_{\text{wind}} + Q_{\text{PV}} + Q_{\text{battery}} \right)$$

Dabei $P_{\text{replace}}$ den äquivalenten wirtschaftlichen Nutzen der Blindleistungseinstelllösung darstellt, $Q_{\text{wind}}$ die Blindleistungsleistung der Windkraftanlage darstellt, $Q_{\text{PV}}$ die Blindleistungsleistung der Photovoltaik darstellt, $Q_{\text{battery}}$ die Blindleistungsleistung der Energiespeichereinheit darstellt, $k_1$ den Umwandlungskoeffizienten der Blindleistungsleistung zu den SVG-Kosten darstellt und $k_2$ den Umwandlungskoeffizienten der SVG-Kosten zu der Wirkleistungsleistung darstellt;

Insbesondere ist in einem Ausführungsbeispiel vorgesehen, dass das Bewertungsmodul speziell dafür verwendet wird:

Bestimmen eines Bewertungsergebnisses der Blindleistungseinstelllösung basierend auf der folgenden Bewertungsfunktion und gemäß dem äquivalenten wirtschaftlichen Nutzen der Blindleistungseinstelllösung, der Blindleistungsleistung der SVG und dem Netzwerkverlust, der der integrierten Feldstation für die Windkraftanlage, die Photovoltaik und die Energiespeichereinheit entspricht:

$$f\left(Q_{\text{wind}}, Q_{\text{PV}}, Q_{\text{battery}}, Q_{\text{SVG}}\right) = P_{\text{loss\_group}} + \lambda_1 P_{\text{replace}} + \lambda_2 k_1 k_2 Q_{\text{SVG}}$$

$$\begin{cases} \lambda_1 = \dfrac{P_{\text{wind}} + P_{\text{PV}} + P_{\text{battery}}}{S_{\text{wind\_N}} + S_{\text{PV\_N}} + S_{\text{battery\_N}}} \\ \lambda_2 = \dfrac{Q_{\text{SVG}}}{Q_{\text{SVG\_max}}} \end{cases}$$

Dabei f $(Q_{wind}, Q_{PV}, Q_{battery}, Q_{SVG})$ das Bewertungsergebnis der Blindleistungseinstelllösung darstellt, $P_{loss\_group}$ den Netzwerkverlust darstellt, der der integrierten Feldstation für die Windkraftanlage, die Photovoltaik und die Energiespeichereinheit entspricht, $Q_{SVG}$ die Blindleistungsleistung der SVG darstellt, $\lambda_1$ den Verdrängungskoeffizienten der Blindleistungskapazität der SVG darstellt, $\lambda_2$ den Gewichtskoeffizienten der Blindleistungsleistung der SVG darstellt, $P_{wind}$ die Wirkleistungsleistung der Windkraftanlage darstellt, $P_{PV}$ die Wirkleistungsleistung der Photovoltaik darstellt, $P_{battery}$ die Wirkleistungsleistung der Energiespeichereinheit darstellt, $S_{wind\_N}$ die Nennkapazität der Windkraftanlage darstellt, $S_{PV\_N}$ die Nennkapazität der Photovoltaik darstellt, $S_{battery\_N}$ die Nennkapazität der Energiespeichereinheit darstellt und $Q_{SVG\_max}$ die maximal einstellbare Blindleistung der SVG darstellt.

Insbesondere ist in einem Ausführungsbeispiel vorgesehen, dass die Vorrichtung auch die folgenden Komponenten umfasst:

ein Netzwerkverlustbestimmungsmodul zum Bestimmen des Netzwerkverlusts entsprechend der integrierten Feldstation für die Windkraftanlage, die Photovoltaik und die Energiespeichereinheit gemäß der folgenden Formel:

$$P_{loss\_group} = \sum_{i=1}^{N_T} G_{Ti} U_i^2 + \sum_{j=1}^{N_L} R_j \frac{P_j^2 + Q_j^2}{U_j^2}$$

Dabei $N_T$ die Gesamtmenge an Transformatoren der integrierten Feldstation für die Windkraftanlage, die Photovoltaik und die Energiespeichereinheit darstellt, $N_L$ die Gesamtmenge an Kollektorleitungen der integrierten Feldstation für die Windkraftanlage, die Photovoltaik und die Energiespeichereinheit darstellt, $G_{Ti}$ die Leitfähigkeit des i-ten Transformators darstellt, $U_i$ die Spannung des Knotens darstellt, in dem sich der i-te Transformator befindet, $R_j$ den Widerstand der j-Leitung darstellt, $U_j$ die Spannung des Zielknotens auf der j-Leitung darstellt, $P_j$ die Wirkleistung darstellt, die von dem Zielknoten injiziert wird, und $Q_j$ die Blindleistung darstellt, die von dem Zielknoten injiziert wird.

Insbesondere ist in einem Ausführungsbeispiel vorgesehen, dass das zweite Bestimmungsmodul wird speziell dafür verwendet:

Bestimmen eines Satzes von den anfänglichen Blindleistungseinstelllösungen basierend auf voreingestellten Einschränkungen und gemäß der maximal einstellbaren Blindleistung der Windkraftanlage, der Photovoltaik und der Energiespeichereinheit und der maximal einstellbaren Blindleistung des SVG in der integrierten Feldstation für die Windkraftanlage, die Photovoltaik und die Energiespeichereinheit;
Bestimmen eines Netzwerkverlusts, der jeder anfänglichen Blindleistungseinstelllösung in dem Satz von den anfänglichen Blindleistungseinstelllösungen entspricht;

Auswählen mehrerer Blindleistungseinstelllösungen in einem Satz von den anfänglichen Blindleistungseinstelllösungen gemäß dem Netzwerkverlust, der jeder der anfänglichen Blindleistungseinstelllösungen entspricht.

In Bezug auf die Vorrichtung zur Blindleistungseinstellung einer integrierten Feldstation für eine Windkraftanlage, eine Photovoltaik und eine Energiespeichereinheit in dem vorliegenden Ausführungsbeispiel wurde das spezifische Verfahren zum Ausführen der Operation jedes Moduls in dem Ausführungsbeispiel des Verfahrens im Detail beschrieben und wird hier nicht im Detail beschrieben.

Gemäß den Ausführungsbeispielen der vorliegenden Anmeldung werden eine Vorrichtung zur Blindleistungseinstellung einer integrierten Feldstation für eine Windkraftanlage, eine Photovoltaik und eine Energiespeichereinheit bereitgestellt, um ein Verfahren zur Blindleistungseinstellung einer integrierten Feldstation für eine Windkraftanlage, eine Photovoltaik und eine Energiespeichereinheit gemäß dem obigen Ausführungsbeispiel auszuführen. Die Implementierung ist die gleiche wie das Prinzip und wird nicht wiederholt.

Gemäß den Ausführungsbeispielen der vorliegenden Anmeldung werden eine elektronische Ausrüstung bereitgestellt, um ein Verfahren zur Blindleistungseinstellung einer integrierten Feldstation für eine Windkraftanlage, eine Photovoltaik und eine Energiespeichereinheit gemäß dem obigen Ausführungsbeispiel auszuführen.

Fig. 4 ist ein schematisches Diagramm einer Struktur einer elektronischen Ausrüstung gemäß einem Ausführungsbeispiel der vorliegenden Anwendung. Die elektronische Ausrüstung 40 umfasst mindestens einen Prozessor 41 und einen Speicher 42.

Dass der Speicher einen Computerausführungsbefehl speichert, dass der mindestens eine Prozessor den im Speicher gespeicherten Computerausführungsbefehl ausführt, so dass der mindestens eine Prozessor ein Verfahren zur Blindleistungseinstellung einer integrierten Feldstation für eine Windkraftanlage, eine Photovoltaik und eine Energiespeichereinheit gemäß dem obigen Ausführungsbeispiel ausführt.

Gemäß den Ausführungsbeispielen der vorliegenden Anmeldung werden eine elektronische Ausrüstung bereitgestellt, um ein Verfahren zur Blindleistungseinstellung einer integrierten Feldstation für eine Windkraftanlage, eine Photovoltaik und eine Energiespeichereinheit gemäß dem obigen Ausführungsbeispiel auszuführen. Die Implementierung ist die gleiche wie das Prinzip und wird nicht wiederholt.

Gemäß den Ausführungsbeispielen der vorliegenden Anmeldung werden ein computerlesbares Speichermedium bereitgestellt, dass Computerausführungsbefehle in dem computerlesbaren Speichermedium gespeichert sind, wodurch ein Verfahren zur Blindleistungseinstellung einer integrierten Feldstation für eine Windkraftanlage, eine Photovoltaik und eine Energiespeichereinheit gemäß einem der obigen Ausführungsbeispiele ausgeführt wird, wenn der Prozessor den Computerausführungsbefehl ausführt.

Das Speichermedium gemäß einem Ausführungsbeispiel der vorliegenden Anmeldung, das einen Computerausführungsbefehl enthält, kann verwendet werden, um einen Computerausführungsbefehl des Verfahrens zur Blindleistungseinstellung einer integrierten Feldstation für eine Windkraftanlage, eine Photovoltaik und eine Energiespeichereinheit gemäß dem obigen Ausführungsbeispiel zu speichern. Die Implementierung ist die gleiche wie das Prinzip und wird nicht wiederholt.

In mehreren Ausführungsbeispielen gemäß der vorliegenden Anmeldung sollte verstanden werden, dass die offenbarten Vorrichtungen und Verfahren auf andere Weise implementiert werden können. Zum Beispiel sind Ausführungsbeispiele der oben beschriebenen Vorrichtung nur schematisch. Zum Beispiel ist die Aufteilung der Einheit nur eine logische Funktionsteilung, die in der tatsächlichen Implementierung eine andere Art der Aufteilung haben kann. Zum Beispiel können mehrere Einheiten oder Komponenten kombiniert oder in ein anderes System integriert werden, oder einige Merkmale können ignoriert oder nicht ausgeführt werden. An einem anderen Punkt kann die angezeigte oder diskutierte gegenseitige Kopplung oder direkte Kopplung oder Kommunikationsverbindung eine indirekte Kopplung oder Kommunikationsverbindung durch einige Schnittstellen, Vorrichtungen oder Einheiten sein, die elektrisch, mechanisch oder in anderer Form sein können.

Die Einheit, die als Trennelement beschrieben wird, kann physisch getrennt sein oder nicht. Die Komponenten, die als Einheiten angezeigt werden, können physische Einheiten sein oder nicht, d.h. sie können sich an einem Ort befinden oder auf mehrere Netzwerkeinheiten verteilt sein. Einige oder alle Einheiten können entsprechend den tatsächlichen Bedürfnissen ausgewählt werden, um den Zweck der Lösung im vorliegenden Ausführungsbeispiel zu erreichen.

Zusätzlich kann jede Funktionseinheit in jedem Ausführungsbeispiel der vorliegenden Anmeldung in eine Verarbeitungseinheit integriert werden, oder jede Einheit kann physisch getrennt existieren, oder zwei oder mehr Einheiten können in einer Einheit integriert werden. Die obige integrierte Einheit kann entweder in Form von Hardware oder in Form einer Funktionseinheit von Hardware und Software implementiert werden.

Die oben beschriebene integrierte Einheit, die in Form einer Funktionseinheit der Software implementiert ist, kann in einem computerlesbaren Speichermedium gespeichert werden. Die Funktionseinheit der Software ist in einem Speichermedium gespeichert und enthält mehrere Befehle zum Durchführen einiger Schritte des Verfahrens gemäß verschiedenen Ausführungsbeispielen der vorliegenden Anmeldung durch ein Computergerät (das ein Personalcomputer, ein Server oder ein Netzwerkgerät sein kann) oder einen Prozessor (Prozessor). Die oben beschriebenen Speichermedien umfassen eine U-Disk, eine mobile Festplatte, einen Nur-Lese-Speicher (Read-Only Memory, ROM), einen Direktzugriffsspeicher (Random Access Memory, RAM), eine Festplatte oder eine optische Platte, die Programmcode speichern kann.

Der Fachmann kann klar verstehen, dass für die Bequemlichkeit und Einfachheit der Beschreibung nur die Aufteilung der obigen Funktionsmodule beispielhaft ist. In praktischen Anwendungen können die obigen Funktionen nach Bedarf durch verschiedene Funktionsmodule zugewiesen werden. Die interne Struktur der Vorrichtung ist in verschiedene Funktionsmodule unterteilt, um alle oder einen Teil der oben beschriebenen Funktionen zu vervollständigen. Der spezifische Arbeitsprozess der oben beschriebenen Vorrichtung kann sich auf den entsprechenden Prozess in dem Ausführungsbeispiel des obigen Verfahrens beziehen und wird hier nicht wiederholt. Abschließend sei darauf hingewiesen, dass die obigen Ausführungsbeispiele nur verwendet werden, um die technische Lösung der vorliegenden Anmeldung zu veranschaulichen, anstatt sie zu begrenzen. Ungeachtet der detaillierten Beschreibung der vorliegenden Anmeldung unter Bezugnahme auf die vorstehenden Ausführungsbeispiele ist zu verstehen, dass der gewöhnliche Fachmann die in den vorstehenden Ausführungsbeispielen beschriebenen technischen Lösungen immer noch modifizieren oder einige oder alle dieser technischen Merkmale gleichwertig ersetzen kann. Diese Modifikationen oder Ersetzungen trennen das Wesen der entsprechenden technischen Lösung nicht vom Umfang der technischen Lösungen der Ausführungsbeispiele der vorliegenden Anmeldung.

**Patentansprüche**

1. Verfahren zur Blindleistungseinstellung einer integrierten Feldstation für eine Windkraftanlage, eine Photovoltaik und eine Energiespeichereinheit, **dadurch gekennzeichnet, dass** es die folgenden Schritte umfasst:

Erfassen von Leistungsinformationen (201) der integrierten Feldstation für die Windkraftanlage, die Photovoltaik und die Energiespeichereinheit, wobei die Leistungsinformation die Leistungsvorhersagedaten der Windkraftanlage, die Leistungsvorhersagedaten der Photovoltaik und die Leistungsdaten der Energiespeichereinheit umfasst;

Bestimmen der maximal einstellbaren Blindleistung (202) der Windkraftanlage, der Photovoltaik und der Energiespeichereinheit gemäß der Leistungsinformation der integrierten Feldstation für die Windkraftanlage, die Photovoltaik und die Energiespeichereinheit;

Bestimmen mehrerer Blindleistungseinstelllösungen (203) basierend auf voreingestellten Einschränkungen und gemäß der maximal einstellbaren Blindleistung der Windkraftanlage, der Photovoltaik und der Energiespeichereinheit und gemäß der maximal einstellbaren Blindleistung des SVG in der integrierten Feldstation für die Windkraftanlage, die Photovoltaik und die Energiespeichereinheit, wobei die Blindleistungseinstelllösungen eine mit der Windkraftanlage, der Photovoltaik, der Energiespeichereinheit und der SVG entsprechende Blindleistungsleistung umfassen;

Bestimmen eines Bewertungsergebnisses (204) jeder Blindleistungseinstelllösung basierend auf einer voreingestellten Bewertungsfunktion und gemäß der mit der Windkraftanlage, der Photovoltaik, der Energiespeichereinheit und der SVG entsprechenden und durch jede Blindleistungsregelungslösung charakterisierten Blindleistungsleistung, wobei das Bewertungsergebnis verwendet wird, um die Blindleistungseinstellkosten zu charakterisieren, die der Blindleistungseinstelllösung entsprechen;

Auswählen einer Ziel-Blindleistungseinstelllösung unter mehreren Blindleistungseinstelllösungen (205) gemäß den Bewertungsergebnissen jeder Blindleistungseinstelllösung und Durchführen einer Blindleistungseinstellung an der integrierten Feldstation für die Windkraftanlage, die Photovoltaik und die Energiespeichereinheit gemäß der Ziel-Blindleistungseinstelllösung;

wobei das Bestimmen eines Bewertungsergebnisses jeder Blindleistungseinstelllösung (204) basierend auf einer voreingestellten Bewertungsfunktion und gemäß der mit der Windkraftanlage, der Photovoltaik, der Energiespeichereinheit und der SVG entsprechenden und durch jede Blindleistungsregelungslösung charakterisierten Blindleistungsleistung die folgenden Schritte umfasst:

Bestimmen des äquivalenten wirtschaftlichen Nutzens der Blindleistungseinstelllösung gemäß der Blindleistungsleistung und der Wirkleistungsleistung, die der Windkraftanlage, der Photovoltaik und der Energiespeichereinheit entsprechen, die durch die Blindleistungseinstelllösung für jede der Blindleistungseinstelllösungen charakterisiert sind;

Dass das Bestimmen des Bewertungsergebnisses der Blindleistungseinstelllösung (204) basierend auf der voreingestellten Bewertungsfunktion und gemäß dem äquivalenten wirtschaftlichen Nutzen der Blindleistungseinstelllösung, der Blindleistungsleistung der SVG und dem Netzwerkverlust, der der integrierten Feldstation für die Windkraftanlage, die Photovoltaik und die Energiespeichereinheit entspricht;

Dass das Bestimmen des äquivalenten wirtschaftlichen Nutzens der Blindleistungseinstelllösung gemäß der Blindleistungsleistung und der Wirkleistungsleistung, die der Windkraftanlage, der Photovoltaik und der Energiespeichereinheit entsprechen, die durch die Blindleistungseinstelllösung charakterisiert sind, die folgenden Schritte umfasst:

Berechnen des äquivalenten wirtschaftlichen Nutzens der Blindleistungseinstelllösung gemäß der folgenden Formel:

$$P_{\text{replace}} = -k_1 k_2 \left( Q_{\text{wind}} + Q_{\text{PV}} + Q_{\text{battery}} \right)$$

Dabei $P_{\text{replace}}$ den äquivalenten wirtschaftlichen Nutzen der Blindleistungseinstelllösung darstellt, $Q_{\text{wind}}$ die Blindleistungsleistung der Windkraftanlage darstellt, $Q_{\text{PV}}$ die Blindleistungsleistung der Photovoltaik darstellt, $Q_{\text{battery}}$ die Blindleistungsleistung der Energiespeichereinheit darstellt, $k_1$ den Umwandlungskoeffizienten der Blindleistungsleistung zu den SVG-Kosten darstellt und $k_2$ den Umwandlungskoeffizienten der SVG-Kosten zu der Wirkleistungsleistung darstellt;

dass das Bestimmen des Bewertungsergebnisses der Blindleistungseinstelllösung (204) basierend auf der voreingestellten Bewertungsfunktion und gemäß dem äquivalenten wirtschaftlichen Nutzen der Blindleistungseinstelllösung, der Blindleistungsleistung der SVG und dem Netzwerkverlust, der der integrierten Feldstation für die Windkraftanlage, die Photovoltaik und die Energiespeichereinheit entspricht, die folgenden Schritte umfasst:

Bestimmen eines Bewertungsergebnisses der Blindleistungseinstelllösung basierend auf der folgenden Bewertungsfunktion und gemäß dem äquivalenten wirtschaftlichen Nutzen der Blindleistungseinstelllösung, der Blindleistungsleistung der SVG und dem Netzwerkverlust, der der integrierten Feldstation für die Windkraftanlage, die Photovoltaik und die Energiespeichereinheit entspricht;

$$f\left(Q_{\text{wind}}, Q_{\text{PV}}, Q_{\text{battery}}, Q_{\text{SVG}}\right) = P_{\text{loss\_group}} + \lambda_1 P_{\text{replace}} + \lambda_2 k_1 k_2 Q_{\text{SVG}}$$

$$\begin{cases} \lambda_1 = \dfrac{P_{\text{wind}} + P_{\text{PV}} + P_{\text{battery}}}{S_{\text{wind\_N}} + S_{\text{PV\_N}} + S_{\text{battery\_N}}} \\ \lambda_2 = \dfrac{Q_{\text{SVG}}}{Q_{\text{SVG\_max}}} \end{cases}$$

Darunter repräsentiert f ($Q_{\text{wind}}$, $Q_{\text{PV}}$, $Q_{\text{battery}}$, $Q_{\text{SVG}}$) das Bewertungsergebnis der Blindleistungs-einstelllösung, $P_{\text{loss\_group}}$ den Netzwerkverlust, der der integrierten Feldstation für die Windkraftanlage, die Photovoltaik und die Energiespeichereinheit entspricht, $Q_{\text{SVG}}$ die Blindleistungsleistung des SVG, $\lambda_1$ den Verdrängungskoeffizienten der Blindleistungskapazität des SVG, $\lambda_2$ den Ge-wichtskoeffizienten der Blindleistungsleistung des SVG, $P_{\text{wind}}$ die Wirkleistungsleistung der Wind-kraftanlage, $P_{\text{PV}}$ die Wirkleistungsleistung der Photovoltaik, $P_{\text{battery}}$ die Wirkleistungsleistung der Energiespeichereinheit, $S_{\text{wind\_N}}$ die Nennkapazität der Windkraftanlage, $S_{\text{PV\_N}}$ die Nennkapazität der Photovoltaik, $S_{\text{battery\_N}}$ die Nennkapazität der Energiespeichereinheit und $Q_{\text{SVG\_max}}$ die maximal einstellbare Blindleistung des SVG.

2. Verfahren nach Anspruch 1, **dadurch gekennzeichnet, dass** die Leistungsvorhersagedaten der Windkraftanlage einen Wirkleistungsleistungsvorhersagewert der Windkraftanlage umfassen, dass die Leistungsvorhersagedaten der Photovoltaik einen Wirkleistungsleistungsvorhersagewert der Photovoltaik umfassen, dass die Leistungsdaten der Energiespeichereinheit einen Wirkleistungsleistungswert der Energiespeichereinheit umfassen, dass das Bestimmen der maximal einstellbaren Blindleistung der Windkraftanlage, der Photovoltaik und der Energiespeichereinheit gemäß der Leistungsinformation der integrierten Feldstation für die Windkraftanlage, die Photovoltaik und die Energiespeichereinheit, die folgende Schritte umfasst:

Bestimmen einer maximal einstellbaren Blindleistung der Windkraftanlage gemäß dem Wirkleistungsleistungsvorhersagewert der Windkraftanlage und der Nennkapazität der Windkraftanlage;
Bestimmen einer maximal einstellbaren Blindleistung der Photovoltaik gemäß dem Wirkleistungsleistungsvorhersagewert der Photovoltaik und einer Nennkapazität der Photovoltaik;
Bestimmen einer maximal einstellbaren Blindleistung der Energiespeichereinheit gemäß dem Wirkleistungsleistungsvorhersagewert der Energiespeichereinheit und der Nennkapazität der Energiespeichereinheit.

3. Verfahren nach Anspruch 1, **dadurch gekennzeichnet, dass** das Verfahren auch die folgenden Schritte umfasst:
Bestimmen eines Netzwerkverlusts, der der integrierten Feldstation für die Windkraftanlage, die Photovoltaik und die Energiespeichereinheit entspricht, gemäß der folgenden Formel:

$$P_{\text{loss\_group}} = \sum_{i=1}^{N_T} G_{Ti} U_i^2 + \sum_{j=1}^{N_L} R_j \frac{P_j^2 + Q_j^2}{U_j^2}$$

Dabei $N_T$ die Gesamtmenge an Transformatoren der integrierten Feldstation für die Windkraftanlage, die Photovoltaik und die Energiespeichereinheit darstellt, $N_L$ die Gesamtmenge an Kollektorleitungen der integrierten Feldstation für die Windkraftanlage, die Photovoltaik und die Energiespeichereinheit darstellt, $G_{Ti}$ die Leitfähigkeit des i-ten Transformators darstellt, $U_i$ die Spannung des Knotens darstellt, in dem sich der i-te Transformator befindet, $R_j$ den Widerstand der j-Leitung darstellt, $U_j$ die Spannung des Zielknotens auf der j-Leitung darstellt, $P_j$ die Wirkleistung darstellt, die von dem Zielknoten injiziert wird, und $Q_j$ die Blindleistung darstellt, die von dem Zielknoten injiziert wird.

4. Verfahren nach Anspruch 3, **dadurch gekennzeichnet, dass** das Bestimmen mehrerer Blindleistungseinstelllösungen (203) basierend auf voreingestellten Einschränkungen und gemäß der maximal einstellbaren Blindleistung der Windkraftanlage, der Photovoltaik und der Energiespeichereinheit und gemäß der maximal einstellbaren Blindleistung des SVG in der integrierten Feldstation für die Windkraftanlage, die Photovoltaik und die Energiespeichereinheit, die folgende Schritte umfasst:

Bestimmen eines Satzes von den anfänglichen Blindleistungseinstelllösungen basierend auf voreingestellten Einschränkungen und gemäß der maximal einstellbaren Blindleistung der Windkraftanlage, der Photovoltaik und der Energiespeichereinheit und der maximal einstellbaren Blindleistung des SVG in der integrierten Feldstation für die Windkraftanlage, die Photovoltaik und die Energiespeichereinheit;

Bestimmen eines Netzwerkverlusts, der jeder anfänglichen Blindleistungseinstelllösung in dem Satz von den anfänglichen Blindleistungseinstelllösungen entspricht;

Auswählen mehrerer Blindleistungseinstelllösungen in einem Satz von den anfänglichen Blindleistungseinstelllösungen gemäß dem Netzwerkverlust, der jeder der anfänglichen Blindleistungseinstelllösungen entspricht.

5. Vorrichtung zur Blindleistungseinstellung einer integrierten Feldstation für eine Windkraftanlage, eine Photovoltaik und eine Energiespeichereinheit, **dadurch gekennzeichnet, dass** sie die folgenden Komponenten umfasst:

ein Erfassungsmodul (301) zum Erfassen von Leistungsinformationen der integrierten Feldstation für die Windkraftanlage, die Photovoltaik und die Energiespeichereinheit, wobei die Leistungsinformation die Leistungsvorhersagedaten der Windkraftanlage, die Leistungsvorhersagedaten der Photovoltaik und die Leistungsdaten der Energiespeichereinheit umfasst;

ein erstes Bestimmungsmodul (302) zum Bestimmen der maximal einstellbaren Blindleistung der Windkraftanlage, der Photovoltaik und der Energiespeichereinheit gemäß der Leistungsinformation der integrierten Feldstation für die Windkraftanlage, die Photovoltaik und die Energiespeichereinheit;

ein zweites Bestimmungsmodul (303) zum Bestimmen mehrerer Blindleistungseinstelllösungen basierend auf voreingestellten Einschränkungen und gemäß der maximal einstellbaren Blindleistung der Windkraftanlage, der Photovoltaik und der Energiespeichereinheit und gemäß der maximal einstellbaren Blindleistung des SVG in der integrierten Feldstation für die Windkraftanlage, die Photovoltaik und die Energiespeichereinheit, wobei die Blindleistungseinstelllösungen eine mit der Windkraftanlage, der Photovoltaik, der Energiespeichereinheit und der SVG entsprechende Blindleistungsleistung umfassen;

ein Bewertungsmodul (304) zum Bestimmen eines Bewertungsergebnisses jeder Blindleistungseinstelllösung basierend auf einer voreingestellten Bewertungsfunktion und gemäß der mit der Windkraftanlage, der Photovoltaik, der Energiespeichereinheit und der SVG entsprechenden und durch jede Blindleistungsregelungslösung charakterisierten Blindleistungsleistung, wobei das Bewertungsergebnis verwendet wird, um die Blindleistungseinstellkosten zu charakterisieren, die der Blindleistungseinstelllösung entsprechen;

ein Einstellmodul (305) zum Auswählen der Ziel-Blindleistungseinstelllösung in mehreren Blindleistungseinstelllösungen gemäß den Bewertungsergebnissen jeder Blindleistungseinstelllösung und zum Durchführen einer Blindleistungseinstellung an der integrierten Feldstation für die Windkraftanlage, die Photovoltaik und die Energiespeicher gemäß der Ziel-Blindleistungseinstelllösung;

dass das Bewertungsmodul (304) speziell dafür verwendet wird:

Bestimmen des äquivalenten wirtschaftlichen Nutzens der Blindleistungseinstelllösung gemäß der Blindleistungsleistung und der Wirkleistungsleistung, die der Windkraftanlage, der Photovoltaik und der Energiespeichereinheit entsprechen, die durch die Blindleistungseinstelllösung für jede der Blindleistungseinstelllösungen charakterisiert sind;

dass das Bestimmen des Bewertungsergebnisses der Blindleistungseinstelllösung basierend auf der voreingestellten Bewertungsfunktion und gemäß dem äquivalenten wirtschaftlichen Nutzen der Blindleistungseinstelllösung, der Blindleistungsleistung der SVG und dem Netzwerkverlust, der der integrierten Feldstation für die Windkraftanlage, die Photovoltaik und die Energiespeichereinheit entspricht;

dass das Bewertungsmodul speziell dafür verwendet wird:

Berechnen des äquivalenten wirtschaftlichen Nutzens der Blindleistungseinstelllösung gemäß der folgenden Formel:

$$P_{\text{replace}} = -k_1 k_2 \left( Q_{\text{wind}} + Q_{\text{PV}} + Q_{\text{battery}} \right)$$

Dabei $P_{\text{replace}}$ den äquivalenten wirtschaftlichen Nutzen der Blindleistungseinstelllösung darstellt, $Q_{\text{wind}}$ die Blindleistungsleistung der Windkraftanlage darstellt, $Q_{\text{PV}}$ die Blindleistungsleistung der Photovoltaik darstellt, $Q_{\text{battery}}$ die Blindleistungsleistung der Energiespeichereinheit darstellt, $k_1$ den Umwandlungskoeffizienten der Blindleistungsleistung zu den SVG-Kosten darstellt und $k_2$ den Umwandlungskoef-

fizienten der SVG-Kosten zu der Wirkleistungsleistung darstellt;
dass das Bewertungsmodul speziell dafür verwendet wird:

Bestimmen eines Bewertungsergebnisses der Blindleistungseinstelllösung basierend auf der folgenden Bewertungsfunktion und gemäß dem äquivalenten wirtschaftlichen Nutzen der Blindleistungseinstelllösung, der Blindleistungsleistung der SVG und dem Netzwerkverlust, der der integrierten Feldstation für die Windkraftanlage, die Photovoltaik und die Energiespeichereinheit entspricht;

$$f\left(Q_{\text{wind}}, Q_{\text{PV}}, Q_{\text{battery}}, Q_{\text{SVG}}\right) = P_{\text{loss\_group}} + \lambda_1 P_{\text{replace}} + \lambda_2 k_1 k_2 Q_{\text{SVG}}$$

$$\begin{cases} \lambda_1 = \dfrac{P_{\text{wind}} + P_{\text{PV}} + P_{\text{battery}}}{S_{\text{wind\_N}} + S_{\text{PV\_N}} + S_{\text{battery\_N}}} \\ \lambda_2 = \dfrac{Q_{\text{SVG}}}{Q_{\text{SVG\_max}}} \end{cases}$$

Dabei $f$ ($Q_{\text{wind}}$, $Q_{\text{PV}}$, $Q_{\text{battery}}$, $Q_{\text{SVG}}$) das Bewertungsergebnis der Blindleistungseinstelllösung darstellt, $P_{\text{loss\_group}}$ den Netzwerkverlust darstellt, der der integrierten Feldstation für die Windkraftanlage, die Photovoltaik und die Energiespeichereinheit entspricht, $Q_{\text{SVG}}$ die Blindleistungsleistung der SVG darstellt, $\lambda_1$ den Verdrängungskoeffizienten der Blindleistungskapazität der SVG darstellt, $\lambda_2$ den Gewichtskoeffizienten der Blindleistungsleistung der SVG darstellt, $P_{\text{wind}}$ die Wirkleistungsleistung der Windkraftanlage darstellt, $P_{\text{PV}}$ die Wirkleistungsleistung der Photovoltaik darstellt, $P_{\text{battery}}$ die Wirkleistungsleistung der Energiespeichereinheit darstellt, $S_{\text{wind\_N}}$ die Nennkapazität der Windkraftanlage darstellt, $S_{\text{PV\_N}}$ die Nennkapazität der Photovoltaik darstellt, $S_{\text{battery\_N}}$ die Nennkapazität der Energiespeichereinheit darstellt und $Q_{\text{SVG\_max}}$ die maximal einstellbare Blindleistung der SVG darstellt.

6. Elektronische Ausrüstung (40), **dadurch gekennzeichnet, dass** sie die folgenden Komponenten umfasst:

mindestens einen Prozessor (41) und einen Speicher (41), dass der Speicher einen Computerausführungsbefehl speichert,
dass der mindestens eine Prozessor den im Speicher gespeicherten Computerausführungsbefehl ausführt, so dass der mindestens eine Prozessor ein Verfahren nach einem der Ansprüche 1 bis 4 ausführt.

7. Computerlesbares Speichermedium, **dadurch gekennzeichnet, dass** Computerausführungsbefehle in dem computerlesbaren Speichermedium gespeichert sind, wodurch ein Verfahren nach einem der Ansprüche 1 bis 4 ausgeführt wird, wenn der Prozessor den Computerausführungsbefehl ausführt.

**Claims**

1. A method for adjusting the reactive power of an integrated field station for a wind turbine, a photovoltaic system and an energy storage unit,
**characterised in that** the method comprises the following steps:

capturing power information (201) of the integrated field station for the wind turbine, the photovoltaic system and the energy storage unit, wherein the power information comprises the power prediction data of the wind turbine, the power prediction data of the photovoltaic system and the power data of the energy storage unit;
determining the maximum settable reactive power (202) of the wind turbine, of the photovoltaic system and of the energy storage unit in accordance with the power information of the integrated field station for the wind turbine, the photovoltaic system and the energy storage unit;
determining a plurality of reactive power setting solutions (203) on the basis of preset restrictions and in accordance with the maximum settable reactive power of the wind turbine, the photovoltaic system and the energy storage unit and in accordance with the maximum settable reactive power of the SVG in the integrated field station for the wind turbine, the photovoltaic system and the energy storage unit, wherein the reactive power setting solutions comprise a reactive power performance corresponding to the wind turbine, the photovoltaic system, the energy storage unit and the SVG;

determining an evaluation result (204) of each reactive power setting solution on the basis of a preset assessment function and in accordance with the reactive power performance corresponding to the wind turbine, the photovoltaic system, the energy storage unit and the SVG and **characterised by** each reactive power control solution, wherein the evaluation result is used to characterise the reactive power setting costs corresponding to the reactive power setting solution;

selecting a target reactive power setting solution from a plurality of reactive power setting solutions (205) in accordance with the evaluation results of each reactive power setting solution and carrying out a reactive power adjustment at the integrated field station for the wind turbine, the photovoltaic system and the energy storage unit in accordance with the target reactive power setting solution;

wherein the determination of an evaluation result of each reactive power setting solution (204) on the basis of a preset evaluation function and in accordance with the reactive power performance corresponding to the wind turbine, the photovoltaic system, the energy storage unit and the SVG and **characterised by** each reactive power control solution comprises the following steps:

determining the equivalent economical use of the reactive power setting solution in accordance with the reactive power performance and the active power performance corresponding to the wind turbine, the photovoltaic system and the energy storage unit, which are **characterised by** the reactive power setting solution for each of the reactive power setting solutions;

in that the determination of the evaluation result of the reactive power setting solution (204) on the basis of the preset evaluation function and in accordance with the equivalent economical use of the reactive power setting solution, the reactive power performance of the SVG and the network loss corresponding to the integrated field station for the wind turbine, the photovoltaic system and the energy storage unit;

in that the determination of the equivalent economical use of the reactive power setting solution in accordance with the reactive power performance and the active power performance corresponding to the wind turbine, the photovoltaic system and the energy storage unit, which are **characterised by** the reactive power setting solution, comprises the following steps:

calculating the equivalent economical use of the reactive power setting solution in accordance with the following formula:

$$P_{\text{replace}} = -k_1 k_2 \left( Q_{\text{wind}} + Q_{\text{PV}} + Q_{\text{battery}} \right)$$

where $P_{\text{replace}}$ represents the equivalent economical use of the reactive power setting solution, $Q_{\text{wind}}$ represents the reactive power performance of the wind turbine, $Q_{\text{PV}}$ represents the reactive power performance of the photovoltaic system, $Q_{\text{battery}}$ represents the reactive power performance of the energy storage unit, $k_1$ represents the conversion coefficient of the reactive power performance to the SVG costs, and $k_2$ represents the conversion coefficient of the SVG costs to the active power performance,

in that the determination of the evaluation result of the reactive power setting solution (204) on the basis of the preset evaluation function and in accordance with the equivalent economical use of the reactive power setting solution, the reactive power performance of the SVG and the network loss corresponding to the integrated field station for the wind turbine, the photovoltaic system and the energy storage unit, comprises the following steps:

determining an evaluation result of the reactive power setting solution on the basis of the following evaluation function and in accordance with the equivalent economical use of the reactive power setting solution, the reactive power performance of the SVG and the network loss corresponding to the integrated field station for the wind turbine, the photovoltaic system and the energy storage system;

$$f\left( Q_{\text{wind}}, Q_{\text{PV}}, Q_{\text{battery}}, Q_{\text{SVG}} \right) = P_{\text{loss\_group}} + \lambda_1 P_{\text{replace}} + \lambda_2 k_1 k_2 Q_{\text{SVG}}$$

$$\begin{cases} \lambda_1 = \dfrac{P_{\text{wind}} + P_{\text{PV}} + P_{\text{battery}}}{S_{\text{wind\_N}} + S_{\text{PV\_N}} + S_{\text{battery\_N}}} \\ \lambda_2 = \dfrac{Q_{\text{SVG}}}{Q_{\text{SVG\_max}}} \end{cases}$$

where $f(Q_{\text{wind}}, Q_{\text{PV}}, Q_{\text{battery}}, Q_{\text{SVG}})$ represents the evaluation result of the reactive power setting solution, $P_{\text{loss\_group}}$ represents the network loss corresponding to the integrated field station for the wind turbine, the photovoltaic system and the energy storage unit, $Q_{\text{SVG}}$ represents the reactive power performance of the SVG, $\lambda_1$ represents the displacement coefficient of the reactive power capacity of the SVG, $\lambda_2$ represents the weighting coefficient of the reactive power performance of the SVG, $P_{\text{wind}}$ represents the active power performance of the wind turbine, $P_{\text{PV}}$ represents the active power performance of the photovoltaic system, $P_{\text{battery}}$ represents the active power performance of the energy storage unit, $S_{\text{wind\_N}}$ represents the nominal capacity of the wind turbine, $S_{\text{PV\_N}}$ represents the nominal capacity of the photovoltaic system, $S_{\text{battery\_N}}$ represents the nominal capacity of the energy storage unit and $Q_{\text{SVG\_max}}$ represents the maximum settable reactive power of the SVG.

2. The method according to claim 1, **characterised in that** the power prediction data of the wind turbine comprise an active power performance prediction value of the wind turbine, **in that** the power prediction data of the photovoltaic system comprise an active power performance prediction value of the photovoltaic system, **in that** the power data of the energy storage unit comprise an active power performance value of the energy storage unit, **in that** the determination of the maximum settable reactive power of the wind turbine, the photovoltaic system and the energy storage unit in accordance with the power information of the integrated field station for the wind turbine, the photovoltaic system and the energy storage unit comprises the following steps:

   determining a maximum settable reactive power of the wind turbine in accordance with the active power performance prediction value of the wind turbine and the nominal capacity of the wind turbine;
   determining a maximum settable reactive power of the photovoltaic system in accordance with the active power performance prediction value of the photovoltaic system and a nominal capacity of the photovoltaic system;
   determining a maximum settable reactive power of the energy storage unit in accordance with the active power performance prediction value of the energy storage unit and the nominal capacity of the energy storage unit.

3. The method according to claim 1, **characterised in that** the method also comprises the following steps: determining a network loss corresponding to the integrated field station for the wind turbine, the photovoltaic system and the energy storage unit in accordance with the following formula:

$$P_{\text{loss\_group}} = \sum_{i=1}^{N_T} G_{Ti} U_i^2 + \sum_{j=1}^{N_L} R_j \frac{P_j^2 + Q_j^2}{U_j^2}$$

where $N_T$ represents the total amount of transformers of the integrated field station for the wind turbine, the photovoltaic system and the energy storage unit, $N_L$ represents the total amount of collector lines of the integrated field station for the wind turbine, the photovoltaic system and the energy storage unit, $G_{Ti}$ represents the conductivity of the i-th transformer, $U_i$ represents the voltage of the node in which the i-th transformer is located, $R_j$ represents the resistance of the j-line, $U_j$ represents the voltage of the target node on the j-line, $P_j$ represents the active power injected from the target node, and $Q_j$ represents the reactive power injected from the target node.

4. The method according to claim 3, **characterised in that** the determination of a plurality of reactive power setting solutions (203) on the basis of preset restrictions and in accordance with the maximum settable reactive power of the wind turbine, the photovoltaic system and the energy storage unit and in accordance with the maximum settable reactive power of the SVG in the integrated field station for the wind turbine, the photovoltaic system and the energy storage unit comprises the following steps:

   determining a set of the initial reactive power setting solutions on the basis of the preset restrictions and in accordance with the maximum settable reactive power of the wind turbine, the photovoltaic system and the energy storage unit and the maximum settable reactive power of the SVG in the integrated field station for the wind turbine, the photovoltaic system and the energy storage unit;

determining a network loss corresponding to each initial reactive power setting solution in the set of the initial reactive power setting solutions;

selecting a plurality of reactive power setting solutions in a set of the initial reactive power setting solutions in accordance with the network loss corresponding to each of the initial reactive power setting solutions.

5. A device for reactive power adjustment of an integrated field station for a wind turbine, a photovoltaic system and an energy storage unit, **characterised in that** it comprises the following components:

a detection module (301) for detecting power information of the integrated field station for the wind turbine, the photovoltaic system and the energy storage unit,

wherein the power information comprises the power prediction data of the wind turbine, the power prediction information of the photovoltaic system and the power data of energy storage unit;

a first determination module (302) for determining the maximum settable reactive power of the wind turbine, the photovoltaic system and the energy storage unit in accordance with the power information of the integrated field station for the wind turbine, the photovoltaic system and the energy storage unit;

a second determination module (303) for determining a plurality of reactive power setting solutions on the basis of preset restrictions and in accordance with the maximum settable reactive power of the wind turbine, the photovoltaic system and

the energy storage unit and in accordance with the maximum settable reactive power of the SVG in the integrated field station for the wind turbine, the photovoltaic system and the energy storage unit, wherein the reactive power setting solutions comprises a reactive power performance corresponding to the wind turbine, the photovoltaic system, the energy storage unit and the SVG;

an evaluation module (304) for determining an evaluation result of each reactive power setting solution on the basis of a preset evaluation function and in accordance with the reactive power performance corresponding to the wind turbine, the photovoltaic system, the energy storage unit and the SVG and **characterised by** each reactive power control solution, wherein the evaluation result is used to characterise the reactive power setting costs corresponding to the reactive power setting solution;

the setting module (305) for selecting the target reactive power setting solution in a plurality of reactive power setting solutions in accordance with the evaluation results of each reactive power setting solution and for carrying out a reactive power adjustment at the integrated field station for the wind turbine, the photovoltaic system and the energy storage unit in accordance with the target reactive power setting solution;

in that the evaluation module (304) is used especially to:

determine the equivalent economical use of the reactive power setting solution in accordance with the reactive power performance and the active power performance corresponding to the wind turbine, the photovoltaic system and the energy storage unit, which are **characterised by** the reactive power setting solution for each of the reactive power setting solutions;

in that the determination of the evaluation result of the reactive power setting solution on the basis of the preset evaluation function and in accordance with the equivalent economical use of the reactive power setting solution, the reactive power performance of the SVG and the network loss corresponding to the integrated field station for the wind turbine, the photovoltaic system and the energy storage unit;

in that the evaluation module is used especially to:

calculate the equivalent economical use of the reactive power setting solution in accordance with the following formula:

$$P_{replace} = -k_1 k_2 \left( Q_{wind} + Q_{PV} + Q_{battery} \right)$$

where $P_{replace}$ represents the equivalent economical use of the reactive power setting solution, $Q_{wind}$ represents the reactive power performance of the wind turbine, $Q_{PV}$ represents the reactive power performance of the photovoltaic system, $Q_{battery}$ represents the reactive power performance of the energy storage unit, $k_1$ represents the conversion coefficient of the reactive power performance to the SVG costs, and $k_2$ represents the conversion coefficient of the SVG costs to the active power performance;

in that the evaluation module is used especially to:

determine an evaluation result of the reactive power setting solution on the basis of the following evaluation function and in accordance with the equivalent economical use of the reactive power setting solution, the reactive power performance of the SVG and the network loss corresponding to the integrated field station for the wind turbine, the photovoltaic system and the energy storage system;

$$f\left(Q_{wind}, Q_{PV}, Q_{battery}, Q_{SVG}\right) = P_{loss\_group} + \lambda_1 P_{replace} + \lambda_2 k_1 k_2 Q_{SVG}$$

$$\begin{cases} \lambda_1 = \dfrac{P_{wind} + P_{PV} + P_{battery}}{S_{wind\_N} + S_{PV\_N} + S_{battery\_N}} \\ \lambda_2 = \dfrac{Q_{SVG}}{Q_{SVG\_max}} \end{cases}$$

where $f(Q_{wind}, Q_{PV}, Q_{battery}, Q_{SVG})$ represents the evaluation result of the reactive power setting solution, $P_{loss\_group}$ represents the network loss corresponding to the integrated field station for the wind turbine, the photovoltaic system and the energy storage unit, $Q_{SVG}$ represents the reactive power performance of the SVG, $\lambda_1$ represents the displacement coefficient of the reactive power capacity of the SVG, $\lambda_2$ represents the weighting coefficient of the reactive power performance of the SVG, $P_{wind}$ represents the active power performance of the wind turbine, $P_{PV}$ represents the active power performance of the photovoltaic system, $P_{battery}$ represents the active power performance of the energy storage unit, $S_{wind\_N}$ represents the nominal capacity of the wind turbine, $S_{PV\_N}$ represents the nominal capacity of the photovoltaic system, $S_{battery\_N}$ represents the nominal capacity of the energy storage unit and $Q_{SVG\_max}$ represents the maximum settable reactive power of the SVG.

6. An electronic set-up (40), **characterised in that** it comprises the following components:

at least one processor (41) and a memory (41),
**in that** the memory stores a computer execution command,
**in that** the at least one processor executes the computer execution command stored in the memory so that the at least one processor executes a method according to any one of claims 1 to 4.

7. A computer-readable storage medium, **characterised in that** computer execution commands are stored in the computer-readable storage medium, whereby a method according to any one of claims 1 to 4 is carried out when the processor executes the computer execution command.

**Revendications**

1. Procédé de réglage de la puissance réactive d'une station de champ intégrée pour une éolienne, une cellule photovoltaïque et une unité de stockage d'énergie, **caractérisé en ce qu'**il comprend les étapes suivantes :

l'acquisition d'informations de puissance (201) de la station de champ intégrée pour l'éolienne, la cellule photovoltaïque et l'unité de stockage d'énergie, les informations de puissance comprenant les données de prévision de puissance de l'éolienne, les données de prévision de puissance de la cellule photovoltaïque et les données de puissance de l'unité de stockage d'énergie ;
la détermination de la puissance réactive maximale réglable (202) de l'éolienne, de la cellule photovoltaïque et de l'unité de stockage d'énergie en fonction des informations de puissance de la station de champ intégrée pour l'éolienne, la cellule photovoltaïque et l'unité de stockage d'énergie ;
la détermination de plusieurs solutions de réglage de la puissance réactive (203) sur la base de contraintes préétablies et en fonction de la puissance réactive maximale réglable de l'éolienne, de la cellule photovoltaïque et de l'unité de stockage d'énergie et en fonction de la puissance réactive maximale réglable du SVG dans la station de champ intégrée pour l'éolienne, la cellule photovoltaïque et l'unité de stockage d'énergie, les solutions de réglage de la puissance réactive comprenant une performance de puissance réactive correspondant à l'éolienne, à la cellule photovoltaïque, à l'unité de stockage d'énergie et au SVG ;

la détermination d'un résultat d'évaluation (204) de chaque solution de réglage de la puissance réactive sur la base d'une fonction d'évaluation préétablie et en fonction de la performance de puissance réactive correspondant à l'éolienne, à la cellule photovoltaïque, à l'unité de stockage d'énergie et au SVG et **caractérisée par** chaque solution de régulation de la puissance réactive, le résultat d'évaluation étant utilisé pour caractériser le coût de réglage de la puissance réactive correspondant à la solution de réglage de la puissance réactive ;

la sélection d'une solution de réglage de la puissance réactive cible parmi plusieurs solutions de réglage de la puissance réactive (205) en fonction des résultats d'évaluation de chaque solution de réglage de la puissance réactive, et la réalisation d'un réglage de la puissance réactive au niveau de la station de champ intégrée pour l'éolienne, la cellule photovoltaïque et l'unité de stockage d'énergie en fonction de la solution de réglage de la puissance réactive cible ;

la détermination d'un résultat d'évaluation de chaque solution de réglage de la puissance réactive (204) sur la base d'une fonction d'évaluation préétablie et en fonction de la performance de puissance réactive correspondant à l'éolienne, à la cellule photovoltaïque, à l'unité de stockage d'énergie et au SVG et **caractérisée par** chaque solution de réglage de la puissance réactive, comprenant les étapes suivantes :

la détermination de l'avantage économique équivalent de la solution de réglage de la puissance réactive en fonction de la performance de puissance réactive et de la performance de puissance active correspondant à l'éolienne, à la cellule photovoltaïque et à l'unité de stockage d'énergie, **caractérisées par** la solution de réglage de la puissance réactive pour chacune des solutions de réglage de la puissance réactive ;

en ce que la détermination du résultat d'évaluation de la solution de réglage de la puissance réactive (204) sur la base de la fonction d'évaluation préétablie et en fonction de l'avantage économique équivalent de la solution de réglage de la puissance réactive, de la performance de puissance réactive du SVG et de la perte de réseau correspondant à la station de champ intégrée pour l'éolienne, la cellule photovoltaïque et l'unité de stockage d'énergie ;

en ce que la détermination de l'avantage économique équivalent de la solution de réglage de la puissance réactive en fonction de la performance de puissance réactive et de la performance de puissance active correspondant à l'éolienne, à la cellule photovoltaïque et à l'unité de stockage d'énergie, **caractérisées par** la solution de réglage de la puissance réactive, comprend les étapes suivantes :

le calcul de l'avantage économique équivalent de la solution de réglage de la puissance réactive selon la formule suivante :

$$P_{replace} = -k_1 k_2 \left( Q_{wind} + Q_{PV} + Q_{battery} \right)$$

où $P_{replace}$ représente l'avantage économique équivalent de la solution de réglage de la puissance réactive, $Q_{wind}$ représente la performance de puissance réactive de l'éolienne, $Q_{PV}$ représente la performance de puissance réactive de la cellule photovoltaïque, $Q_{battery}$ représente la performance de puissance réactive de l'unité de stockage d'énergie, $k_1$ représente le coefficient de conversion de la performance de puissance réactive en coût du SVG et $k_2$ représente le coefficient de conversion du coût du SVG en performance de puissance active ;

en ce que la détermination du résultat d'évaluation de la solution de réglage de la puissance réactive (204) sur la base de la fonction d'évaluation préétablie et en fonction de l'avantage économique équivalent de la solution de réglage de la puissance réactive, de la performance de puissance réactive du SVG et de la perte de réseau correspondant à la station de champ intégrée pour l'éolienne, la cellule photovoltaïque et l'unité de stockage d'énergie, comprend les étapes suivantes :

la détermination d'un résultat d'évaluation de la solution de réglage de la puissance réactive sur la base de la fonction d'évaluation suivante et en fonction de l'avantage économique équivalent de la solution de réglage de la puissance réactive, de la performance de puissance réactive du SVG et la perte de réseau correspondant à la station de champ intégrée pour l'éolienne, la cellule photovoltaïque et l'unité de stockage d'énergie ;

$$f\left(Q_{\text{wind}}, Q_{\text{PV}}, Q_{\text{battery}}, Q_{\text{SVG}}\right) = P_{\text{loss\_group}} + \lambda_1 P_{\text{replace}} + \lambda_2 k_1 k_2 Q_{\text{SVG}}$$

$$\begin{cases} \lambda_1 = \dfrac{P_{\text{wind}} + P_{\text{PV}} + P_{\text{battery}}}{S_{\text{wind\_N}} + S_{\text{PV\_N}} + S_{\text{battery\_N}}} \\ \lambda_2 = \dfrac{Q_{\text{SVG}}}{Q_{\text{SVG\_max}}} \end{cases}$$

où $f(Q_{\text{wind}}, Q_{\text{PV}}, Q_{\text{battery}}, Q_{\text{SVG}})$ représente le résultat d'évaluation de la solution de réglage de la puissance réactive, $P_{\text{loss\_group}}$ représente la perte de réseau correspondant à la station de champ intégrée pour l'éolienne, la cellule photovoltaïque et l'unité de stockage d'énergie, $Q_{\text{SVG}}$ représente la performance de puissance réactive du SVG, $\lambda_1$ représente le coefficient d'éviction de la capacité de puissance réactive du SVG, $\lambda_2$ représente le coefficient de pondération de la performance de puissance réactive du SVG, $P_{\text{wind}}$ représente la performance de puissance active de l'éolienne, $P_{\text{PV}}$ représente la performance de puissance active de la cellule photovoltaïque, $P_{\text{battery}}$ représente la performance de puissance active de l'unité de stockage d'énergie, $S_{\text{wind\_N}}$ représente la capacité nominale de l'éolienne, $S_{\text{PV\_N}}$ représente la capacité nominale de la cellule photovoltaïque, $S_{\text{battery\_N}}$ représente la capacité nominale de l'unité de stockage d'énergie et $Q_{\text{SVG\_max}}$ représente la puissance réactive maximale réglable du SVG.

2. Procédé selon la revendication 1, **caractérisé en ce que** les données de prévision de puissance de l'éolienne comprennent une valeur de prévision de performance de puissance active de l'éolienne, **en ce que** les données de prévision de puissance de la cellule photovoltaïque comprennent une valeur de prévision de performance de puissance active de la cellule photovoltaïque, **en ce que** les données de puissance de l'unité de stockage d'énergie comprennent une valeur de performance de puissance active de l'unité de stockage d'énergie, **en ce que** la détermination de la puissance réactive réglable maximale de l'éolienne, de la cellule photovoltaïque et de l'unité de stockage d'énergie en fonction des informations de puissance de la station de champ intégrée pour l'éolienne, la cellule photovoltaïque et l'unité de stockage d'énergie, comprend les étapes suivantes :

la détermination d'une puissance réactive maximale réglable de l'éolienne en fonction de la valeur de prévision de performance de puissance active de l'éolienne et de la capacité nominale de l'éolienne ;
la détermination d'une puissance réactive maximale réglable de la cellule photovoltaïque en fonction de la valeur de prévision de performance de puissance active de la cellule photovoltaïque et d'une capacité nominale de la cellule photovoltaïque ;
la déterminer d'une puissance réactive maximale réglable de l'unité de stockage d'énergie en fonction de la valeur de prévision de performance de puissance active de l'unité de stockage d'énergie et de la capacité nominale de l'unité de stockage d'énergie.

3. Procédé selon la revendication 1, **caractérisé en ce que** le procédé comprend également les étapes suivantes : la détermination d'une perte de réseau correspondant à la station de champ intégrée pour l'éolienne, la cellule photovoltaïque et l'unité de stockage d'énergie, selon la formule suivante :

$$P_{\text{loss\_group}} \quad \sum_{i=1}^{N_T} G_{Ti} U_i^2 + \sum_{j=1}^{N_L} R_j \frac{P_j^2 + Q_j^2}{U_j^2}$$

où $N_T$ représente la quantité totale de transformateurs de la station de champ intégrée pour l'éolienne, la cellule photovoltaïque et l'unité de stockage d'énergie, $N_L$ représente la quantité totale de lignes de collecteur de la station de champ intégrée pour l'éolienne, la cellule photovoltaïque et l'unité de stockage d'énergie, $G_{Ti}$ représente la conductivité du ième transformateur, $U_i$ représente la tension du nœud dans lequel se trouve le ième transformateur, $R_j$ représente la résistance de la ligne j, $U_j$ représente la tension du nœud cible sur la ligne j, $P_j$ représente la puissance active injectée par le nœud cible et $Q_j$ représente la puissance réactive injectée par le nœud cible.

**4.** Procédé selon la revendication 3, **caractérisé en ce que** la détermination de plusieurs solutions de réglage de la puissance réactive (203) sur la base de contraintes préétablies et en fonction de la puissance réactive maximale réglable de l'éolienne, de la cellule photovoltaïque et de l'unité de stockage d'énergie et selon la puissance réactive maximale réglable du SVG dans la station de champ intégrée pour l'éolienne, la cellule photovoltaïque et l'unité de stockage d'énergie, comprend les étapes suivantes :

la détermination d'un ensemble de solutions de réglage de la puissance réactive initiales sur la base de contraintes préétablies et en fonction de la puissance réactive maximale réglable de l'éolienne, de la cellule photovoltaïque et de l'unité de stockage d'énergie et de la puissance réactive maximale réglable du SVG dans la station de champ intégrée pour l'éolienne, la cellule photovoltaïque et l'unité de stockage d'énergie ;
la détermination d'une perte de réseau correspondant à chaque solution de réglage de la puissance réactive initiale dans l'ensemble des solutions de réglage de la puissance réactive initiales ;
la sélection de plusieurs solutions de réglage de la puissance réactive dans un ensemble des solutions de réglage de puissance réactive initiales en fonction de la perte de réseau correspondant à chacune des solutions de réglage de la puissance réactive initiales.

**5.** Dispositif de réglage de la puissance réactive d'une station de champ intégrée pour une éolienne, une cellule photovoltaïque et une unité de stockage d'énergie, **caractérisé en ce qu'**il comprend les composants suivants :

un module d'acquisition (301) pour acquérir des informations de puissance de la station de champ intégrée pour l'éolienne, la cellule photovoltaïque et l'unité de stockage d'énergie, les informations de puissance comprenant les données de prévision de puissance de l'éolienne, les données de prévision de puissance de la cellule photovoltaïque et les données de puissance de l'unité de stockage d'énergie ;
un premier module de détermination (302) pour déterminer la puissance réactive maximale réglable de l'éolienne, de la cellule photovoltaïque et de l'unité de stockage d'énergie en fonction des informations de puissance de la station de champ intégrée pour l'éolienne, la cellule photovoltaïque et l'unité de stockage d'énergie ;
un deuxième module de détermination (303) pour déterminer plusieurs solutions de réglage de puissance réactive sur la base de contraintes préétablies et en fonction de la puissance réactive maximale réglable de l'éolienne, de la cellule photovoltaïque et de l'unité de stockage d'énergie et en fonction de la puissance réactive maximale réglable du SVG dans la station de champ intégrée pour l'éolienne, la cellule photovoltaïque et l'unité de stockage d'énergie, les solutions de réglage de la puissance réactive comprenant une performance de puissance réactive correspondant à l'éolienne, à la cellule photovoltaïque, à l'unité de stockage d'énergie et au SVG ;
un module d'évaluation (304) pour déterminer un résultat d'évaluation de chaque solution de réglage de la puissance réactive sur la base d'une fonction d'évaluation préétablie et en fonction de la performance de puissance réactive correspondant à l'éolienne, à la cellule photovoltaïque, à l'unité de stockage d'énergie et au SVG et **caractérisée par** chaque solution de régulation de la puissance réactive, le résultat d'évaluation étant utilisé pour caractériser le coût de réglage de la puissance réactive correspondant à la solution de réglage de la puissance réactive ;
un module de réglage (305) pour sélectionner la solution de réglage de la puissance réactive cible parmi plusieurs solutions de réglage de la puissance réactive en fonction des résultats d'évaluation de chaque solution de réglage de la puissance réactive et pour réaliser un réglage de la puissance réactive au niveau de la station de champ intégrée pour l'éolienne, la cellule photovoltaïque et l'unité de stockage d'énergie en fonction de la solution de réglage de la puissance réactive cible ;
en ce que le module d'évaluation (304) est spécifiquement utilisé pour déterminer l'avantage économique équivalent de la solution de réglage de la puissance réactive en fonction de la performance de puissance réactive et de la performance de puissance active correspondant à l'éolienne, à la cellule photovoltaïque et à l'unité de stockage d'énergie, **caractérisées par** la solution de réglage de la puissance réactive pour chacune des solutions de réglage de la puissance réactive ;
en ce que la détermination du résultat d'évaluation de la solution de réglage de la puissance réactive sur la base de la fonction d'évaluation préétablie et en fonction de l'avantage économique équivalent de la solution de réglage de la puissance réactive, de la performance de puissance réactive du SVG et de la perte de réseau correspondant à la station de champ intégrée pour l'éolienne, la cellule photovoltaïque et l'unité de stockage d'énergie ;
en ce que le module d'évaluation est utilisé spécifiquement pour :

le calcul de l'avantage économique équivalent de la solution de réglage de la puissance réactive selon la formule suivante :

$$P_{replace} = -k_1 k_2 \left( Q_{wind} + Q_{PV} + Q_{battery} \right)$$

où $P_{replace}$ représente l'avantage économique équivalent de la solution de réglage de la puissance réactive, $Q_{wind}$ représente la performance de puissance réactive de l'éolienne, $Q_{PV}$ représente la performance de puissance réactive de la cellule photovoltaïque, $Q_{battery}$ représente la performance de puissance réactive de l'unité de stockage d'énergie, $k_1$ représente le coefficient de conversion de la performance de puissance réactive en coût du SVG et $k_2$ représente le coefficient de conversion du coût du SVG en performance de puissance active ;

en ce que le module d'évaluation est utilisé spécifiquement pour :

la détermination d'un résultat d'évaluation de la solution de réglage de la puissance réactive sur la base de la fonction d'évaluation suivante et en fonction de l'avantage économique équivalent de la solution de réglage de la puissance réactive, de la performance de puissance réactive de la SVG et de la perte de réseau correspondant à la station de champ intégrée pour l'éolienne, la cellule photovoltaïque et l'unité de stockage d'énergie ;

$$f\left( Q_{wind}, Q_{PV}, Q_{battery}, Q_{SVG} \right) = P_{loss\_group} + \lambda_1 P_{replace} + \lambda_2 k_1 k_2 Q_{SVG}$$

$$\begin{cases} \lambda_1 = \dfrac{P_{wind} + P_{PV} + P_{battery}}{S_{wind\_N} + S_{PV\_N} + S_{battery\_N}} \\ \lambda_2 = \dfrac{Q_{SVG}}{Q_{SVG\_max}} \end{cases}$$

où $f(Q_{wind}, Q_{PV}, Q_{battery}, Q_{SVG})$ représente le résultat d'évaluation de la solution de réglage de la puissance réactive, $P_{loss\_group}$ représente la perte de réseau correspondant à la station de champ intégrée pour l'éolienne, la cellule photovoltaïque et l'unité de stockage d'énergie, $Q_{SVG}$ représente la performance de puissance réactive du SVG, $\lambda_1$ représente le coefficient d'éviction de la capacité de puissance réactive du SVG, $\lambda_2$ représente le coefficient de pondération de la performance de puissance réactive du SVG, $P_{wind}$ représente la performance de puissance active de l'éolienne, $P_{PV}$ représente la performance de puissance active de la cellule photovoltaïque, $P_{battery}$ représente la performance de puissance active de l'unité de stockage d'énergie, $S_{wind\_N}$ représente la capacité nominale de l'éolienne, $S_{PV\_N}$ représente la capacité nominale de la cellule photovoltaïque, $S_{battery\_N}$ représente la capacité nominale de l'unité de stockage d'énergie et $Q_{SVG\_max}$ représente la puissance réactive maximale réglable du SVG.

6. Équipement électronique (40), **caractérisé en ce qu'**il comprend les composants suivants :

au moins un processeur (41) et une mémoire (41),
**en ce que** la mémoire stocke une instruction d'exécution informatique,
**en ce que** l'au moins un processeur exécute l'instruction d'exécution informatique stockée dans la mémoire, de telle sorte que l'au moins un processeur exécute un procédé selon l'une quelconque des revendications 1 à 4.

7. Support de stockage lisible par ordinateur, **caractérisé en ce que** des instructions d'exécution informatiques sont stockées dans le support de stockage lisible par ordinateur, ce qui permet d'exécuter un procédé selon l'une quelconque des revendications 1 à 4 lorsque le processeur exécute l'instruction d'exécution informatique.

System zur Blindleistungseinstellung einer integrierten Feldstation
für Windkraft, Photovoltaik und Energiespeicher

Integrierte Feldstation für Windkraft, Photovoltaik und Energiespeicher

Vorrichtung zur Blindleistungseinstellung einer integrierten Feldstation für Windkraft, Photovoltaik und Energiespeicher

Datensammelungs- vorrichtung

Figur 1

Erfassen von Leistungsinformationen der integrierten Feldstation für Windkraft, Photovoltaik und Energiespeicher ~ 201

Bestimmen der maximal einstellbaren Blindleistung eine Windkraftanlage, einer Photovoltaik und einer Energiespeichereinheit gemäß der Leistungsinformation der integrierten Feldstation für Windkraft, Photovoltaik und Energiespeicher ~ 202

Bestimmen einer Vielzahl von Blindleistungseinstelllösungen basierend auf voreingestellten Einschränkungen und basierend auf der maximal einstellbaren Blindleistung der Windkraftanlage, der Photovoltaik und der Energiespeichereinheit und der maximal einstellbaren Blindleistung der SVG in der integrierten Feldstation für Windkraft, Photovoltaik und Energiespeicher ~ 203

Bestimmen eines Bewertungsergebnisses jeder Blindleistungseinstelllösung basierend auf einer voreingestellten Bewertungsfunktion und gemäß der Blindleistungsleistung, die der Windkraftanlage, der Photovoltaik, der Energiespeichereinheit und der SVG entspricht, die durch jede Blindleistungseinstelllösung charakterisiert ist ~ 204

Filtern der Ziel-Blindleistungseinstelllösung in einer Vielzahl von Blindleistungseinstelllösungen gemäß den Bewertungsergebnissen jeder Blindleistungseinstelllösung und Durchführen einer Blindleistungseinstellung an der integrierten Feldstation für Windkraft, Photovoltaik und Energiespeicher gemäß der Ziel-Blindleistungseinstelllösung ~ 205

Figur 2

30

Vorrichtung zur Blindleistungseinstellung einer integrierten Feldstation für
Windkraft, Photovoltaik und Energiespeicher

| Erfassungs-modul | Erstes Bestimmungs-modul | Zweites Bestimmungs-modul | Bewertungs-modul | Einstellmodul |
|---|---|---|---|---|

301          302          303          304          305

Figur 3

Elektronische Ausrüstung

**40**

Speicher

**42**

Prozessor

**41**

Figur 4

**EP 4 304 041 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2020203951 A1